# EUROPEAN PATENT APPLICATION

(11) **EP 4 738 231 A1**
(43) Date of publication of application: **06.05.2026**
(21) Application number: 24832034.3
(22) Date of filing: 27.06.2024
(51) Int. Cl.: G06Q 50/02

(54) **COMPUTER PROGRAM, METHOD, AND DEVICE**

(30) Priority: 27.06.2023 JP 2023105310
(71) Applicant: KUBOTA CORPORATION, Osaka-shi, Osaka 556-8601 (JP)
(72) Inventor: IKEDA, Ryo, Sakai-shi, Osaka 590-0908 (JP); MIURA, Keisuke, Sakai-shi, Osaka 590-0908 (JP)
(74) Representative: Cabinet Beau de Loménie
(86) International application number: PCT/JP2024/023307
(87) International publication number: WO 2025/005175

(57) **Abstract**

Provided is a computer program, a method, and an apparatus to support non-farmers.

A computer program is configured to cause a computer to perform the steps of acquiring agricultural field information relating to an agricultural field, and, based on the acquired agricultural field information, outputting an agricultural field object (30) representing the agricultural field in a virtual space. Preferably, the computer program is configured to cause a computer to perform the steps of acquiring agricultural machine information relating to an agricultural machine, based on the acquired agricultural machine information, outputting an agricultural machine object (40) representing the agricultural machine in the virtual space, receiving an operation relating to the agricultural machine object (40), based on the received operation, performing a movement of the agricultural machine object (40) relative to the agricultural field object (30) in the virtual space, and, causing the agricultural field object (30) to change in the virtual space according to the movement of the agricultural machine object (40).

## Description

### Technical Field

The present technique relates to computer programs, methods, and apparatuses to each display an agricultural field object representing an agricultural field in a virtual space.

### Background Art

There has been proposed an agricultural support device to create a planned travel route for an agricultural machine to travel in an agricultural field, and cause an external terminal to display a virtual travel situation when the agricultural machine travels on the planned travel route. It is possible for a user to check the virtual travel situation and cause the agricultural support device to modify the planned travel route.

### Citation List

### Patent Literature

PTL 1: Japanese Unexamined Patent Application Publication No. 2019-126628

### Summary of Invention

### Technical Problem

Some farmers rent their agricultural fields to others. In the case where a person not engaged in agriculture (hereinafter "non-farmer") rents an agricultural field from a farmer, the non-farmer may not be able to grow crops well.

The present disclosure was made in view of the above issue, and it is an object of the present disclosure to provide computer programs, methods, and apparatuses to support non-farmers.

### Solution to Problem

A computer program according to an example embodiment of the present disclosure is a computer program to cause a computer to perform the steps of acquiring agricultural field information relating to an agricultural field, and, based on the acquired agricultural field information, outputting an agricultural field object representing the agricultural field in a virtual space.

**In** the present disclosure, an agricultural field object is output in a virtual space. The agricultural field object corresponds to an agricultural field, such as an agricultural field that a user rents from someone else. It is possible for the user, before actually performing work in the agricultural field, to check each step of agricultural work through the agricultural field object.

The computer program according to an example embodiment of the present disclosure is configured to cause a computer to perform the steps of acquiring agricultural machine information relating to an agricultural machine, based on the acquired agricultural machine information, outputting an agricultural machine object representing the agricultural machine in the virtual space, receiving an operation relating to the agricultural machine object, based on the received operation, performing a movement of the agricultural machine object relative to the agricultural field object in the virtual space, and causing the agricultural field object to change in the virtual space according to the movement of the agricultural machine object.

**In** the present disclosure, an agricultural machine object is output in a virtual space. The user inputs an operation relating to the agricultural machine object. The agricultural machine object moves on the agricultural field object, and the agricultural field object changes according to the movement of the agricultural machine object.

The computer program according to an example embodiment of the present disclosure is configured to cause a computer to perform the steps of acquiring crop information relating to at least one type of crop, receiving a selection of one of the at least one type of crop included in the crop information, outputting one or more crop objects representing one or more crops of the selected one of the at least one type to the agricultural field object, based on the received operation, performing the movement of the agricultural machine object relative to the one or more crop objects in the virtual space, and causing the one or more crop objects to change in the virtual space according to the movement of the agricultural machine object.

**In** the present disclosure, crop object(s) is/are output to the agricultural field object. The user inputs an operation relating to the agricultural machine object. The agricultural machine object moves on the agricultural field object, and the crop object(s) change(s) according to the movement of the agricultural machine object.

The agricultural machine information includes a fee for using the agricultural machine in the agricultural field, and the computer program according to an example embodiment of the present disclosure is configured to cause a computer to perform the step of, after performing the movement of the agricultural machine object, receiving a payment of the fee.

**In** the present disclosure, after the movement of the agricultural machine object is performed, a payment of the fee for using the actual agricultural machine in the actual agricultural field is received. It is possible for the user to request another person to perform work using the actual agricultural machine in the actual agricultural field.

The computer program according to an example embodiment of the present disclosure is configured to cause a computer to perform the step of outputting a movement log relating to the agricultural machine object.

**In** the present disclosure, the movement log relating to the agricultural machine object is output. It is possible for the user to check the movement log and change the settings of the agricultural machine.

The computer program according to an example embodiment of the present disclosure is configured to cause a computer to perform the steps of acquiring crop information relating to at least one type of crop, acquiring environment information relating to an environment including weather, receiving a selection of one of the at least one type of crop, outputting one or more crop objects representing one or more crops of the selected one of the at least one type to the agricultural field object, and causing the one or more crop objects representing the one or more crops of the selected one of the at least one type to change in the virtual space according to a change in the environment.

**In** the present disclosure, the crop objects change in the virtual space according to changes in the environment including weather.

The computer program according to an example embodiment of the present disclosure is configured to cause a computer to perform the steps of acquiring crop information relating to at least one type of crop and production information including the amount of fertilizer application or a yield of the at least one type of crop, receiving a selection of one of the at least one type of crop included in the crop information, outputting one or more crop objects representing one or more crops of the selected one of the at least one type to the agricultural field object, and, based on the production information, causing the one or more crop objects representing the one or more crops of the selected one of the at least one type to change in the virtual space.

**In** the present disclosure, the crop objects are caused to change in the virtual space based on the production information including the amount of applied fertilizer or a yield of the one or more types of crops.

The computer program according to an example embodiment of the present disclosure is configured to cause a computer to perform the steps of acquiring avatar information relating to an agricultural-work-related person, receiving a call for the agricultural-work-related person, and based on the acquired avatar information, outputting an avatar representing the called agricultural-work-related person in the virtual space.

**In** the present disclosure, the avatar representing the agricultural-work-related person is output in the virtual space. It is possible for the user to receive advice relating to the work process from, for example, the avatar representing a farmer in the virtual space.

The computer program according to an example embodiment of the present disclosure is configured to cause a computer to perform the steps of receiving a request for the agricultural-work-related person to perform work in the virtual space, and, when the agricultural-work-related person performs the requested work, causing the agricultural field object to change in the virtual space according to the work.

**In** the present disclosure, it is possible to request the agricultural-work-related person to perform work in the actual agricultural field. When the agricultural-work-related person performs the requested work, the agricultural field object changes in the virtual space according to the work.

The computer program according to an example embodiment of the present disclosure is configured to cause a computer to perform the steps of receiving a request for the agricultural-work-related person to perform work in the virtual space, and, after the agricultural-work-related person performs the requested work, receiving a payment paid to the agricultural-work-related person.

**In** the present disclosure, it is possible to request the agricultural-work-related person to perform work in the actual agricultural field. After the agricultural-work-related person performs the requested work, a payment is paid to the agricultural-work-related person.

The computer program according to an example embodiment of the present disclosure is configured to cause a computer to perform the steps of acquiring avatar information relating to an agricultural-machine-related person, receiving a call for the agricultural-machine-related person, and, based on the acquired avatar information, outputting an avatar representing the called agricultural-machine-related person in the virtual space.

**In** the present disclosure, the avatar representing the agricultural-machine-related person is output in the virtual space. It is possible for the user to receive advice relating to the settings of the agricultural machine from, for example, the avatar representing the engineer of agricultural machines in the virtual space.

The computer program according to an example embodiment of the present disclosure is configured to cause a computer to perform the steps of receiving a request for the agricultural-machine-related person to perform work in the virtual space, and, when the agricultural-machine-related person performs the requested work, causing a movement of the agricultural machine object to change in the virtual space according to the work.

**In** the present disclosure, it is possible to request the avatar representing the agricultural-machine-related person to perform work, such as the work for making settings of the agricultural machine in the virtual space. When the agricultural-machine-related person performs the requested work, a movement of the agricultural machine object is changed in the virtual space according to the work.

The computer program according to an example embodiment of the present disclosure is configured to cause a computer to perform the steps of receiving a request for the agricultural-machine-related person to perform work in the virtual space, and, after the agricultural-machine-related person performs the requested work, receiving a payment paid to the agricultural-machine-related person.

**In** the present disclosure, it is possible to request the agricultural-machine-related person to perform work on the actual agricultural machine. After the agricultural-machine-related person performs the requested work, a payment is paid to the agricultural-machine-related person.

A method according to an example embodiment of the present disclosure includes acquiring agricultural field information relating to an agricultural field, and, based on the acquired agricultural field information, outputting an agricultural field object representing the agricultural field in a virtual space.

**In** the present disclosure, an agricultural field object is output in a virtual space. The agricultural field object corresponds to an agricultural field, such as an agricultural field that a user rents from someone else. It is possible for the user, before actually performing work in the agricultural field, to check each step of agricultural work through the agricultural field object.

An apparatus according to an example embodiment of the present disclosure includes an acquirer to acquire agricultural field information relating to an agricultural field, and an output interface to, based on the acquired agricultural field information, output an agricultural field object representing the agricultural field in a virtual space.

**In** the present disclosure, an agricultural field object is output in a virtual space. The agricultural field object corresponds to an agricultural field, such as an agricultural field that a user rents from someone else. It is possible for the user, before actually performing work in the actual agricultural field, to check each step of agricultural work through the agricultural field object.

### Advantageous Effects of Invention

The computer program, method, and device according to an example embodiment of the present disclosure are configured to output an agricultural field object in a virtual space. The agricultural field object corresponds to an agricultural field, for example, an agricultural field that the user rents from someone else. It is possible for the user, before performing work in the actual agricultural field, to check each step of agricultural work via the agricultural field object.

### Brief Description of Drawings

[FIG. 1] FIG. 1 illustrates an agricultural support system according to an example embodiment 1.
[FIG. 2] FIG. 2 illustrates an example of a conceptual diagram showing an agricultural field table.
[FIG. 3] FIG. 3 illustrates an example of a conceptual diagram showing a yield map or a fertilizer application map.
[FIG. 4] FIG. 4 illustrates an example of a conceptual diagram showing travel data.
[FIG. 5] FIG. 5 illustrates terminals of users wishing to rent an agricultural field and a server.
[FIG. 6] FIG. 6 is an image displayed on a display of a terminal.
[FIG. 7] FIG. 7 illustrates an example of a screen displayed when an agricultural field button is operated.
[FIG. 8A] FIG. 8A illustrates an example of a screen displayed on a display when a crop information button is operated.
[FIG. 8B] FIG. 8B illustrates an example of a screen displayed on a display when an agricultural machine information button is operated.
[FIG. 8C] FIG. 8C illustrates an example of a screen displayed on a display when an advisor information button is operated.
[FIG. 9] FIG. 9 illustrates an example of a screen displayed on a display when a crop button indicating rice is operated and an agricultural machine button indicating an agricultural machine is operated.
[FIG. 10A] FIG. 10A illustrates an example of an image displayed on a display indicating the growth process of rice.
[FIG. 10B] FIG. 10B illustrates an example of an image displayed on a display indicating the growth process of rice.
[FIG. 10C] FIG. 10C illustrates an example of an image displayed on a display indicating the growth process of rice
[FIG. 11] FIG. 11 illustrates an example of an image indicating an agricultural machine object moving in a virtual space and the agricultural field object.
[FIG. 12] FIG. 12 illustrates an example of an image displayed on a display when a simulation is ended.
[FIG. 13] FIG. 13 illustrates an example of a screen displayed on a display when a request button is operated.
[FIG. 14] FIG. 14 illustrates an example of a screen displayed on a display when a step button indicating step A and an agricultural machine is operated.
[FIG. 15] FIG. 15 illustrates an example of a screen displayed on a display when a confirm request button is operated.
[FIG. 16] FIG.16 illustrates an example of a screen displayed on a display when work performed by an agent is completed.
[FIG. 17] FIG. 17 is a flowchart illustrating a display process to display a virtual space on a display of a terminal of a user.
[FIG. 18] FIG. 18 is a flowchart illustrating a display process to display a virtual space on a display of a terminal of a user.
[FIG. 19] FIG. 19 is a flowchart illustrating a payment process performed when work performed by an agent is completed.
[FIG. 20] FIG. 20 illustrates an example of a screen displayed when a button of agricultural field 1 is operated and an advisor A is called, according to an example embodiment 2.
[FIG. 21] FIG. 21 illustrates an example of a screen displayed when a button of agricultural field 1 is operated and an advisor A is called.
[FIG. 22] FIG. 22 illustrates an example of a screen displayed when a user requests an advisor to perform work.
[FIG. 23] FIG. 23 illustrates an example of a screen displayed on a display when work performed by an advisor is completed.
[FIG. 24] FIG. 24 is a flowchart illustrating a display process to display a virtual space on a display of a terminal of a user.
[FIG. 25] FIG. 25 illustrates an example of a screen displayed when a button of agricultural field 1 is operated and an advisor B is called, according to an example embodiment 3.
[FIG. 26] FIG. 26 illustrates an example of a screen displayed when a user requests an advisor to perform work.
[FIG. 27] FIG. 27 illustrates an example of a screen displayed on a display when work performed by an advisor is completed.

### Description of Embodiments

### Example Embodiment 1

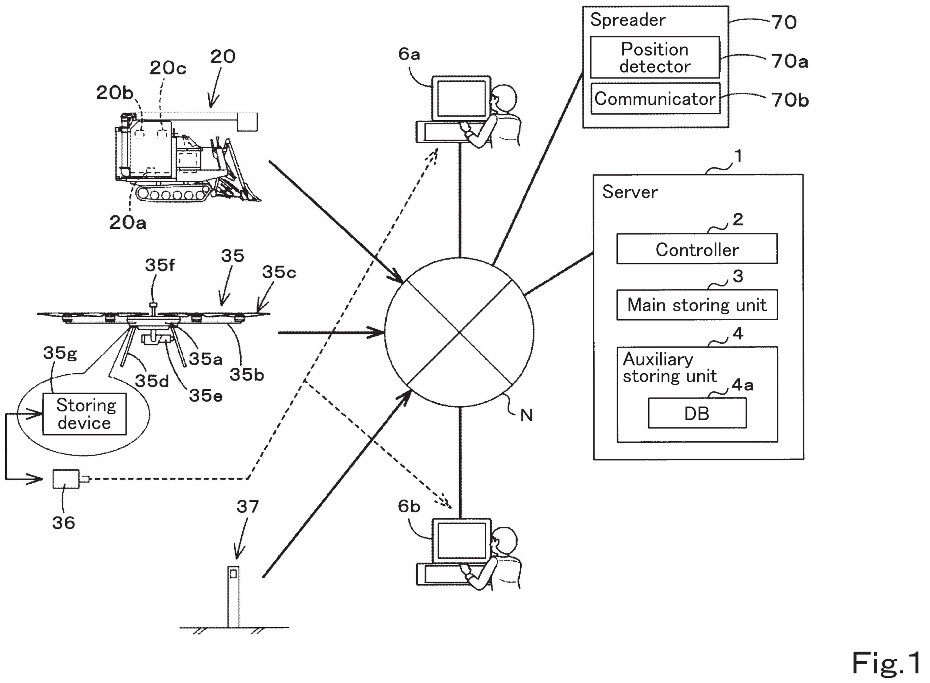

The following discusses the present invention with reference to drawings indicating an agricultural support system according to an example embodiment 1. FIG. 1 illustrates the agricultural support system.

The agricultural support system includes a management computer 6a connected via a network N and provided, for example, at a farmhouse, a farming company or the like, and a server 1 to which the management computer 6a and the like are connectable. The management computer 6a includes, for example, a personal computer (PC) allocated to a manager, worker, and/or the like. The management computer 6a may include a portable terminal such as a smartphone, a tablet, or a PDA.

As shown in FIG. 1, the server 1 includes a controller 2, a main storing unit (memory and/or storage) 3, and an auxiliary storing unit (memory and/or storage) 4. The controller 2 includes, for example, a processor. The processor includes, for example, a CPU, an MPU, a GPU and/or the like. The controller 2 may include a logic circuit. The logic circuit includes, for example, an FPGA, an ASIC and/or the like. The main storing unit 3 includes, for example, RAM. The auxiliary storing unit 4 includes, for example, ROM, a read-write storage medium such as EEPROM, FlashROM, and/or hard disc, and/or the like. The auxiliary storing unit 4 stores control program(s) for use in performing agricultural support. The controller 2 reads the control program(s) from the auxiliary storing unit 4 into the main storing unit 3 and execute the control program(s). The control program(s) may be installed into the auxiliary storing unit 4 from a recording medium 5 such as an optical disc or a portable flash memory. Note that the control program(s) may be downloaded into an auxiliary storing device from another server 1 via a communication network N. The auxiliary storing unit 4 includes a database (DB) 4a to store various data relating to agriculture.

The server 1 is an agricultural support device (apparatus) to support agriculture, and configured to acquire various data (information) relating to agriculture. The server 1 acquires data relating to planting/cropping, e.g., data such as crop data, soil data, fertilizer application data, and/or the like. The crop data and the soil data are obtained by, for example, remote sensing. The fertilizer application data indicates the amount(s) and type(s), etc., of fertilizer spread in the agricultural field.

The crop data relates to crops planted in the agricultural field, such as data indicating the yield of crops in an agricultural field (yield data), data indicating the chemical composition of crops (crop composition data), data indicating growth situations of crops (growth data) and the like. The crop composition data includes, for example, the moisture of crops (moisture content), the taste of crops (protein content), and/or the like. The soil data relates to soil in an agricultural field, such as data indicating the chemical composition of soil (soil composition data).

The yield data and the crop composition data are detected at, for example, a harvester 20 when harvesting crops. The harvester 20 is a combine to harvest crops. The harvester 20 includes a measuring device 20a, a communicator 20b, and a position detector 20c. The measuring device 20a includes a load cell to detect the weight (yield) of harvested crops, and/or a spectroscopic analyzer to measure the moisture content and the protein content of the harvested crops. The position detector 20c is configured to detect the position of the harvester 20, and detect position (latitude and longitude) based on data received from positioning satellite(s) of GPS and/or the like. The harvester 20, after harvesting crops, associates the weight (yield) of the harvested crops detected by the measuring device 20a with the position detected by the position detector 20c to obtain yield data. The harvester 20, after harvesting crops, associates the amount of moisture (moisture content) and the amount of protein (protein content) of the harvested crops detected by the measuring device 20a with the position detected by the position detector 20c to obtain crop composition data. The harvester 20 stores the positions detected by the position detector 20c in time series, and uses the stored positions as travel data indicating the travel route of the harvester 20 in the agricultural field.

The communicator 20b is configured or programmed to transmit detection information detected at least at the harvester 20, i.e., the yield data and the crop composition data (moisture content, protein content), to external device(s). The communicator 20b transmits the yield data and the crop composition data (moisture content, protein content) to the server 1. The server 1, upon receiving the yield data and the crop composition data (moisture content, protein content), stores the received yield data and crop composition data (moisture content, protein content) in the database (DB) 4a.

Base data for the growth data is detected by, for example, an unmanned flying object such as a multicopter 35. The multicopter 35 includes a body 35a, arms 35b provided on the body 35a, rotor blades 35c provided on the arms 35b, and skids 35d provided on the body 35a. The rotor blades 35c are configured to generate lift to cause the multicopter 35 to fly, and each include a rotor to give a turning force and blades (propeller) to be rotated by driving the rotor.

The multicopter 35 includes an imager 35e. The imager 35e includes an infrared camera and/or the like, and is configured to capture an image of crops planted in an agricultural field. The multicopter 35 includes a position detector 35f. The position detector 35f is configured to detect the position of the multicopter 35, and detect position (latitude and longitude) based on data transmitted from positioning satellite(s) of GPS and/or the like. The multicopter 35 flies over an agricultural field and captures an image of crops in the agricultural field from above, and associates the image (captured image) captured by the imager 35e with the position detected by the position detector 35f to obtain captured image data.

The captured image data is stored in a storing unit (memory and/or storage) 35g provided in the multicopter 35. The captured image data stored in the storing unit 35g of the multicopter 35 is transferred to an electronic storage medium 36 such as a USB memory or an SD card, and stored in the electronic storage medium 36. The captured image data stored in the electronic storage medium 36 is transferred to the management computer 6a or another stationary management computer 6b provided at an aerial photography service company or the like separately from the management computer 6a. The transferred captured image data is stored in the management computer 6a or the management computer 6b. After the management computer 6a or the management computer 6b logs in to the server 1, the captured image data stored in the management computer 6a or the management computer 6b is transmitted to the server 1. The server 1, upon receiving the captured image data, stores the received captured image data in the DB 4a. The server 1 analyzes the captured image data (captured image) to generate growth data using vegetation index or indices such as DVI, RVI, NDVI, GNDVI, SAVI, TSAVI, CAI, MTCI, REP, PRI, and/or RSI. The growth data generated by the server 1 is stored in the DB 4a. The above-mentioned vegetation indices are examples, and do not imply any limitation.

It is noted that the management computer 6a or the management computer 6b may generate the growth data from the captured image data and transmit the generated growth data therefrom to the server 1. In the above-described example embodiment, the multicopter 35 captures an image of crops in the agricultural field, as shown in FIG. 1. Note, however, that an agricultural field monitor 37 provided at the agricultural field may capture an image of crops in the agricultural field and the position of the agricultural field associated with the agricultural field monitor 37 may be added to the captured image to obtain captured image data.

The soil data, as with the growth data, can be obtained by capturing an image of the agricultural field using an imager such as a camera, and analyzing the captured image. That is, it is only necessary that the "growth data" in the above description be replaced with the "soil data".

As described above, the server 1 is configured to acquire the yield data, the crop composition data (moisture content, protein content) and the growth data as the crop data, and store the crop data in the DB 4a. Furthermore, the server 1 is configured to acquire the soil data and store the soil data in the DB 4a.

With regard to the fertilizer application data, the amount of fertilizer and the type of fertilizer to be spread in the agricultural field are determined based on the yield data and the growth data in the past. In so doing, the agricultural field may be divided into a plurality of sections and the amount and the type of fertilizer to be spread may be determined for each of the sections. For example, an owner of the agricultural field determines the amount and type of fertilizer to spread for each of the sections, and inputs the determined information into the management computer 6a. With this, the fertilizer application data is stored in the DB 4a.

The owner of the agricultural field can, by operating the management computer 6a, input the location and the area of the agricultural field of the owner, the type(s) of crops grown in the past, the area of the agricultural field, and the owner's ID such that they are associated with each other. When the owner inputs the location and the area of the agricultural field, for example, a touch panel may display a map indicating the agricultural field of the owner and allow the owner to input information indicating the shape of the agricultural field in addition to the location and the area of the agricultural field by moving a finger along the outline of the agricultural field of the owner on the touch panel. The input location, area, and shape of the agricultural field, and the owner's ID are transmitted to the server 1. The server 1 is configured to generate, in addition to the received location of the agricultural field and the owner's ID, the ID of the agricultural field corresponding to the location of the agricultural field, and store, in the DB 4a, the location, area, and shape of the agricultural field, the ID of the agricultural field and the owner's ID such that they are associated with each other. The DB 4a may also store information relating to time-series weather based on data provided from a meteorological agency or a temperature sensor, a humidity sensor, a light receiving sensor and/or the like provided at the agricultural field.

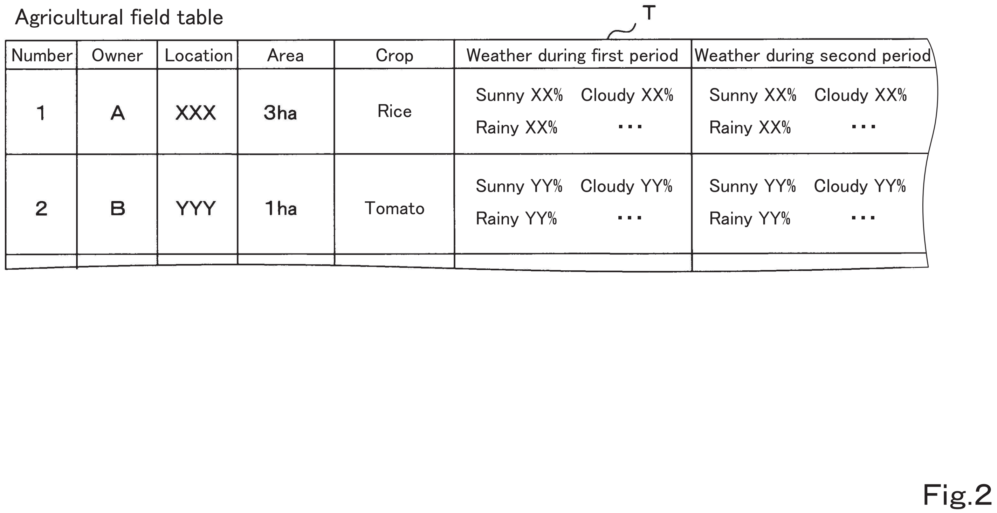

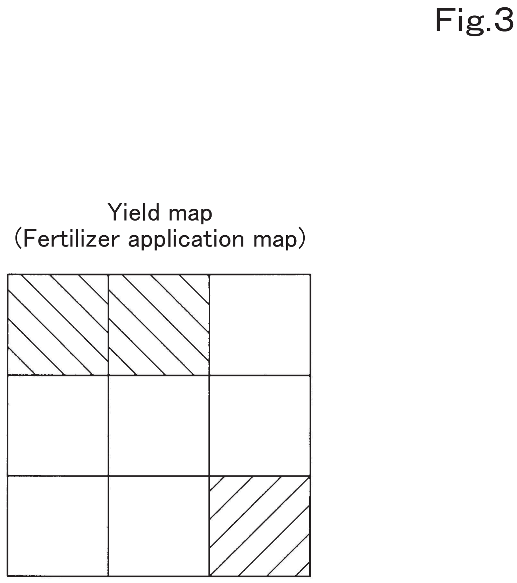

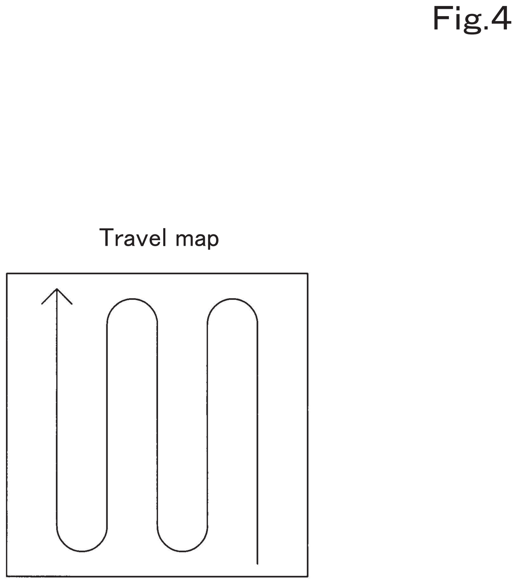

FIG. 2 illustrates an example of a conceptual diagram showing an agricultural field table T stored in the DB 4a. FIG. 3 illustrates an example of a conceptual diagram showing a yield map or a fertilizer application map stored in the DB 4a. FIG. 4 illustrates an example of a conceptual diagram showing a travel map stored in the DB 4a. For example, the server 1 is configured to cause the DB 4a to store information relating to agriculture as the agricultural field table T, the yield map, the fertilizer application map, the travel map and/or the like.

The agricultural field table T stores information relating to agricultural field(s). The agricultural field table T includes a number column, an owner column, a location column, an area column, a crop column, a column for weather during a first period, a column for weather during a second period, and/or the like. The number column stores a number to identify an agricultural field (ID of the agricultural field). The owner column stores an owner's ID which is the ID of the owner of the agricultural field. The location column stores information indicating the location of the agricultural field. The information indicating the location of the agricultural field includes latitude and longitude, for example. The area column stores information indicating the area of the agricultural field. The crop column stores information indicating the type(s) of crops grown in the past. The column for weather during a first period stores the percentage of sunny hours, the percentage of cloudy hours, and the percentage of rainy hours, average temperature, average humidity and/or the like of the first period. The column for weather during a second period stores the percentage of sunny hours, the percentage of cloudy hours, and the percentage of rainy hours, average temperature, average humidity and/or the like of the second period. The second period follows the first period. Column(s) for weather during the subsequent period(s) such as a column for weather during a third period following the second period and a column for weather during a fourth period following the third period, may be provided. The periods correspond to respective growth stages of crops.

The yield map is information in which an agricultural field is divided in a plurality of sections and which indicates the yield of crops in each of the sections. How to divide the agricultural field into a plurality of sections may be determined by the owner of the agricultural field or the server 1. For example, the server 1 is configured to, based on the yield data, create the yield map indicating the levels of the yield of crops for each of the sections. For example, in FIG. 3, the agricultural field is divided into nine sections. The hatching lines sloping downward to the right indicate low yield, each section without hatching indicates moderate yield, and hatching lines sloping upward to the right indicate high yield. In the case where the yield map is displayed on the display of the management computer 6a, as shown in FIG. 3, the yield map is displayed such that the difference in yield between sections is recognizable.

The fertilizer application map is information in which the agricultural field is divided in a plurality of sections and which indicates the amount of fertilizer application in each of the sections. For example, the server 1 is configured to, based on the fertilizer application data, create the fertilizer application map indicating the amounts of spread fertilizer on a per-type basis and on a per-section basis. For example, in FIG. 3, the agricultural field is divided in nine sections with regard to a predetermined type of fertilizer. The hatching lines sloping downward to the right indicate a small amount of fertilizer application, each section without hatching indicates a moderate amount of fertilizer application, and hatching sloping upward to the right indicate a large amount of fertilizer application. In the case where the fertilizer application map is displayed on the display 14 of the terminal 10, as shown in FIG. 3, the fertilizer application map is displayed such that the difference in amount of fertilizer application between sections is recognizable.

For example, the server 1 is configured to, based on the travel data, create a travel map indicating the route traveled in the past by an agricultural machine such as a tractor, a rice transplanter, or a combine in the agricultural field. For example, as shown in FIG. 4, the travel map indicates the route traveled by the agricultural machine in a meandered manner over the agricultural field. The agricultural machine may be automatically operated or manually operated.

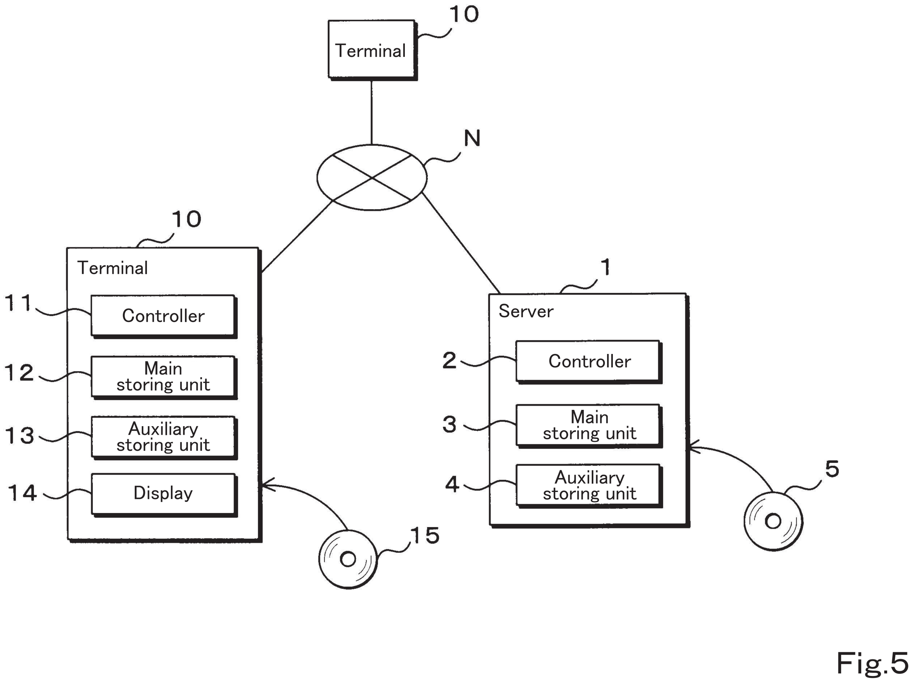

FIG. 5 illustrates the terminal(s) 10 of the user(s) wishing to rent an agricultural field, the server 1, and the like. For example, one or more terminals 10 of one or more users wishing to rent an agricultural field are connected to the network N. Each terminal 10 is, for example, a smartphone, a tablet terminal, a PC, or a wearable terminal. Examples of the wearable terminal include terminals in the shape of goggles and glasses. The terminal 10 includes a controller 11, a main storing unit (memory and/or storage) 12, an auxiliary storing unit (memory and/or storage) 13, and a display 14. The controller 11 includes, for example, a processor. The processor includes a CPU, a MPU, a GPU or the like, for example. The controller 11 may include a logic circuit. Examples of the logic circuit include an FPGA, an ASIC and the like. The main storing unit 12 includes RAM, for example. The auxiliary storing unit 13 includes, for example, ROM, a read-write storing medium such as EEPROM, FlashROM, and/or hard disc, and/or the like. The auxiliary storing unit 13 stores application program(s) for use in performing agricultural support. The controller 11 reads the application program(s) from the auxiliary storing unit 13 into the main storing unit 12, and executes the application program(s). The application program(s) may be installed from a recording medium 15 (see FIG. 1) such as an optical disc or portable flash memory into the auxiliary storing unit 13. It is noted that the application program(s) may be downloaded from another server 1 into an auxiliary storing device via the communication network N.

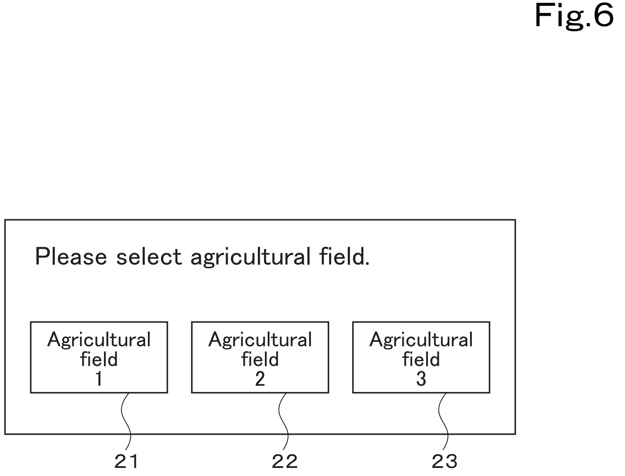

FIG. 6 is an image displayed on the display 14 of the terminal 10. The human operator of the terminal 10 (hereinafter a "user") is a person who rents an agricultural field from someone else. The user operates the terminal 10 to activate the application program. The controller 11 acquires, based on the application program, from the server 1, information of the agricultural field table T, i.e., information indicating candidate(s) of an agricultural field for rent, generates image data indicating buttons 21 to 23 of agricultural field 1 to agricultural field 3, and causes the display 14 to display the buttons 21 to 23 (see FIG. 6). The numbers of agricultural fields as in the agricultural field 1 to the agricultural field 3 correspond to the numbers stored in the number column (IDs of the agricultural fields) included in the agricultural field table T. For example, the agricultural field 1 indicates the agricultural field with the number 1 shown in the number column. The user operates, e.g., presses or clicks, one of the buttons 21 to 23 of agricultural field 1 to agricultural field 3 to select one of the agricultural fields. Note that, when the user operates an operation portion such as a mouse to put a cursor on one of the agricultural field 1 to the agricultural field 3, the corresponding information (location, area, crops, etc.) included in the columns relating to the corresponding one of the numbers 1 to 3 in the agricultural field table T may be overlaid on the button 21, 22 or 23. It is noted that the server 1 may generate the image data indicating the buttons 21 to 23 and transmit the generated image data to the terminal 10, and then the controller 11 may cause the display 14 to display the buttons 21 to 23.

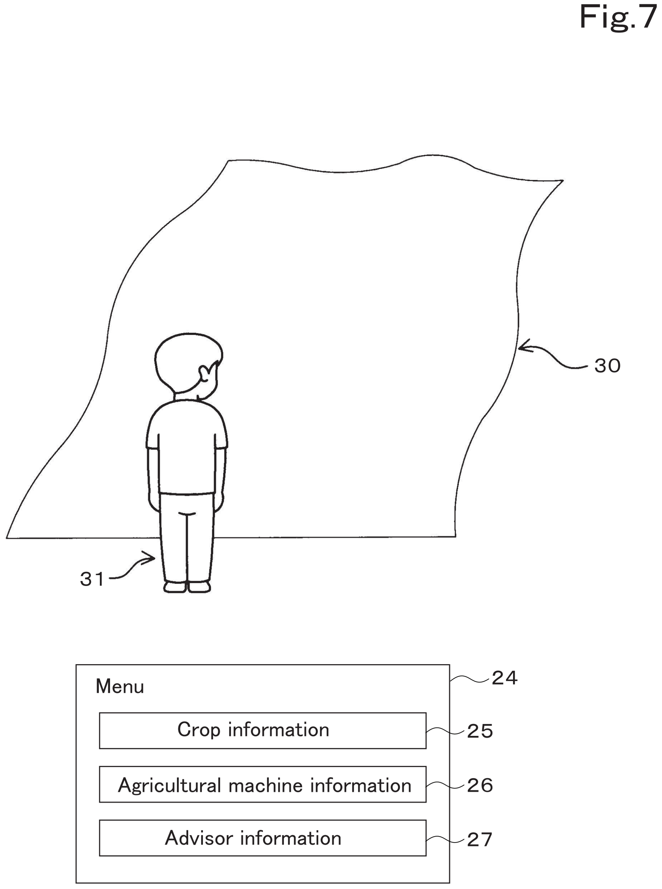

FIG. 7 illustrates an example of a screen displayed when the button 21 of the agricultural field 1 is operated. The controller 11 causes the display 14 to display a virtual space and display, in the virtual space, an agricultural field object 30 representing the agricultural field 1, an avatar 31 representing the user, and a menu screen 24. It is noted that the virtual space is achieved by VR or AR, for example. The display 14 displays the agricultural field object 30 that is reflective of the information included in the agricultural field table T, for example, the area of the agricultural field. In the case that the agricultural field table T includes the shape of the agricultural field, the shape of the agricultural field may be reflected in the agricultural field object 30. The agricultural field object 30 corresponds to the actual agricultural field. The image data indicating the virtual space, the agricultural field object 30, the avatar 31, and the menu screen 24 is generated by the control program in the server 1 or the application program in the terminal 10. When the image data is generated by the control program in the server 1, the image data is transmitted to the terminal 10. The controller 11, based on the generated image data, causes the display 14 to display the virtual space, the agricultural field object 30, the avatar 31, and the menu screen 24. It is noted that the controller 11 may cause the display 14 to display a plurality of avatars 31 as candidates, and the user may select one of the avatars 31, and the controller 11 may cause the display 14 to display the selected avatar 31. The menu includes a crop information button 25, an agricultural machine information button 26, and an advisor information button 27.

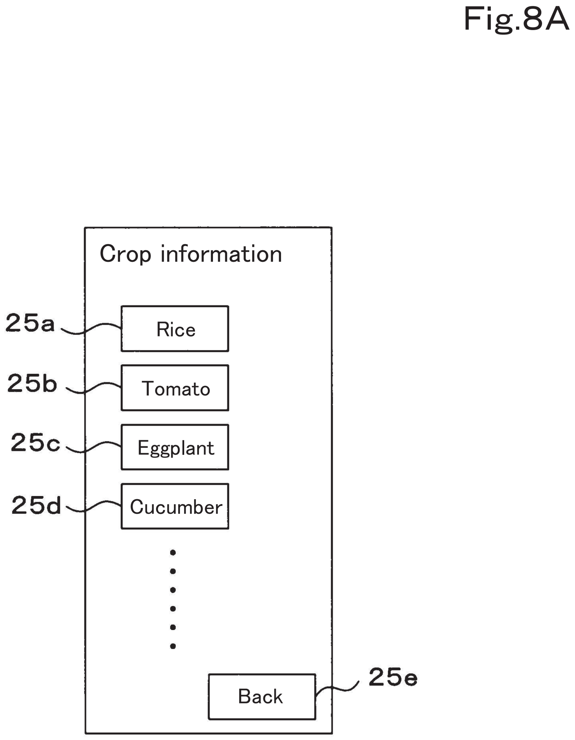

FIG. 8A illustrates an example of a screen displayed on the display 14 when the crop information button 25 is operated. When the user operates the crop information button 25, for example, the display 14 displays crop buttons 25a to 25d indicating the respective types of crops including rice, tomato, eggplant, cucumber and the like, and a back button 24e. The user can operate one of the crop buttons 25a to 25d that indicates one of the types of crops the user wishes to grow. When the user operates the back button 25e, the display 14 returns to the screen shown in FIG. 7. The image data indicating the crop buttons 25a to 25d and the back button 24e is generated by the control program in the server 1 or the application program in the terminal 10. When the image data is generated by the control program in the server 1, the image data is transmitted to the terminal 10. The controller 11, based on the generated image data, causes the display 14 to display the crop buttons 25a to 25d and the back button 25e.

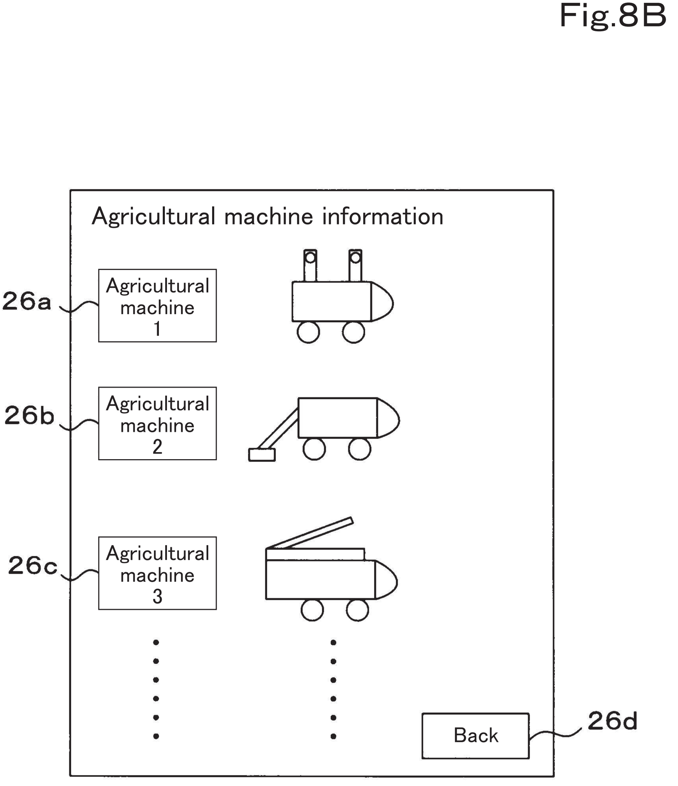

FIG. 8B illustrates an example of a screen displayed on the display 14 when the agricultural machine information button 26 is operated. When the user operates the agricultural machine information button 26, for example, the display 14 displays agricultural machine buttons 26a to 26c indicating an agricultural machine 1, an agricultural machine 2, and an agricultural machine 3, respectively, and a back button 26d. Furthermore, the display 14 displays a thumbnail indicating the agricultural machine 1 next to the agricultural machine button 26a of agricultural machine 1, a thumbnail indicating the agricultural machine 2 next to the agricultural machine button 26b of agricultural machine 2, and a thumbnail indicating the agricultural machine 3 next to the agricultural machine button 26c of agricultural machine 3 . The user can operate one of the agricultural machine buttons 26a to 26c that indicates one of the agricultural machines the user wishes to use. The display 14 only displays the agricultural machine(s) available for use at the time that the user operates the agricultural machine information buttons 26. Note that the display 14 may display agricultural machine(s) unavailable for use at the time that the user operates the agricultural machine information buttons 26. In this case, the agricultural machines unavailable for use are displayed in a manner that can be distinguished from those available for use, for example, displayed in a different color from those available for use, and the buttons indicating the agricultural machines unavailable for use are configured not to be operated. When the user operates the back button 26d, the display 14 returns to the screen shown in FIG. 7. The image data indicating the agricultural machine buttons 26a to 26c and the back button 26d is generated by the control program in the server 1 or the application program in the terminal 10. When the image data is generated by the control program in the server 1, the image data is transmitted to the terminal 10. The controller 11, based on the generated image data, causes the display 14 to display the agricultural machine buttons 26a to 26c and the back button 26d. The server 1 stores, in the auxiliary storing unit 4, information relating to the agricultural machine(s), such as parameter(s) relating to the actual agricultural machine 1 including a travel speed, a torque supplied to a working device, the direction of travel and/or the like, and appropriately update the information.

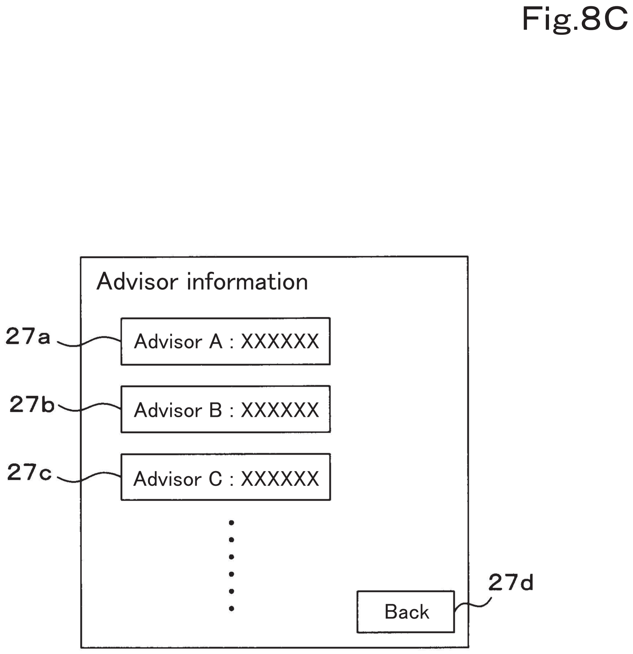

FIG. 8C illustrates an example of a screen displayed on the display 14 when the advisor information button 27 is operated. When the user operates the advisor information button 27, the display 14 displays advisor buttons 27a to 27c indicating an advisor A, an advisor B, and an advisor C, respectively, and a back button 27d. The advisor buttons 27a to 27c are displayed with the details of the advisors. For example, the details include the occupations and specialties of the advisors. Examples of the occupations of advisors include a farmer, an engineer familiar with agricultural machines and the like. Examples of the specialties of advisors include the types of crops that the advisors have grown in the past, types of agricultural machines (including a tractor, a rice transplanter, a combine and the like) that the advisors have used, and the like. The advisors may be or may not be the owner(s) of the agricultural field. The user can operate one of the advisor buttons 27a to 27c that indicates one of the advisors that the user wishes to have advice from, to call the advisor. When the user operates the back button 27d, the screen returns to that shown in FIG. 7. The advisors correspond to agricultural-work-related persons or agricultural-machine-related persons. The image data indicating the advisor buttons 27a to 27c and the back button 27d is generated by the control program in the server 1 or the application program in the terminal 10. When the image data is generated by the control program in the server 1, the image data is transmitted to the terminal 10. The controller 11, based on the generated image data, causes the display 14 to display the advisor buttons 27a to 27c and the back button 27d.

Each advisor owns a terminal 10. The terminal 10 has installed thereon, i.e., stores, the application program for use in performing the agricultural support. When the user operates a button indicating one of the advisors, the terminal 10 of the user transmits a call instruction to the terminal 10 of the advisor. The terminal 10 of the user may transmit the call instruction to the terminal 10 of the advisor directly or via the server 1. The application program installed on the terminal 10 of the advisor, when the call instruction is received, displays information indicating that a call is received, and an accept button on the display 14 of the terminal 10 of the advisor. In the case where the terminal 10 of the advisor includes a speaker or a vibration function, the speaker may emit sounds, or the terminal 10 may vibrate. When the advisor operates the accept button, a bidirectional communication between the terminal 10 of the advisor and the terminal 10 of the user is established. When the bidirectional communication is not established, the display 14 displays a notification indicating that the communication cannot be established and then returns to the screen shown in FIG. 7. When the bidirectional communication is ended, the display 14 returns to the screen shown in FIG. 7.

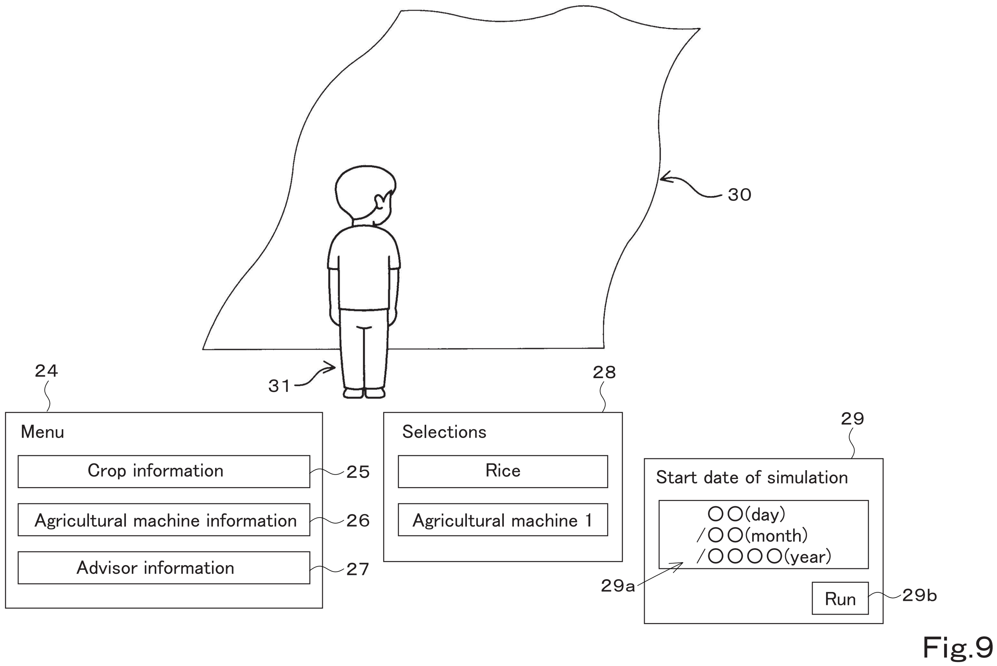

FIG. 9 illustrates an example of a screen displayed on the display 14 when the crop button 25a indicating rice is operated and the agricultural machine button 26a indicating the agricultural machine 1 is operated. When rice is selected as the type of crop that the user wishes to grow by operating the crop button 25a indicating rice, and the agricultural machine 1 is selected as the agricultural machine that the user wishes to use by operating the agricultural machine button 26a indicating the agricultural machine 1, the display 14 displays a display section 28 indicating the user's selections, and displays rice and the agricultural machine 1 within the display section 28. The display 14 displays a display section 29 indicating the start date of a simulation. The display section 29 indicating the start date of a simulation includes a section 29a for input of day/month/year and a run button 29b. The image data indicating the display section 28 indicating the selections, the display section 29 indicating the start date of a simulation, the section 29a for input of day/ month/year, and the run button 29b is generated by the control program in the server 1 or the application program in the terminal 10. When the image data is generated by the control program in the server 1, the image data is transmitted to the terminal 10. The controller 11, based on the generated image data, causes the display 14 to display the display section 28 indicating the selections, the display section 29 indicating the start date of a simulation, the section 29a for input of day/month/year, and the run button 29b. When the user inputs the date when the user wishes to start work in the section 29a for input of day/month/year and operates the run button 29b, the terminal 10 of the user transmits, to the server 1, the selections, i.e., rice, agricultural machine 1, and the day/month/year when the user wishes to start work.

The server 1 receives the selections and the day/month/year when the user wishes to start work, and, based on the selections, the day/month/year when the user wishes to start work, and information included in the agricultural field table T, performs the simulation of the growth process of rice in the agricultural field 1 with time. The server 1 generates image data indicating the growth state of rice at predetermined day/month/year. For example, the server 1 generates image data indicating the growth state of rice every week.

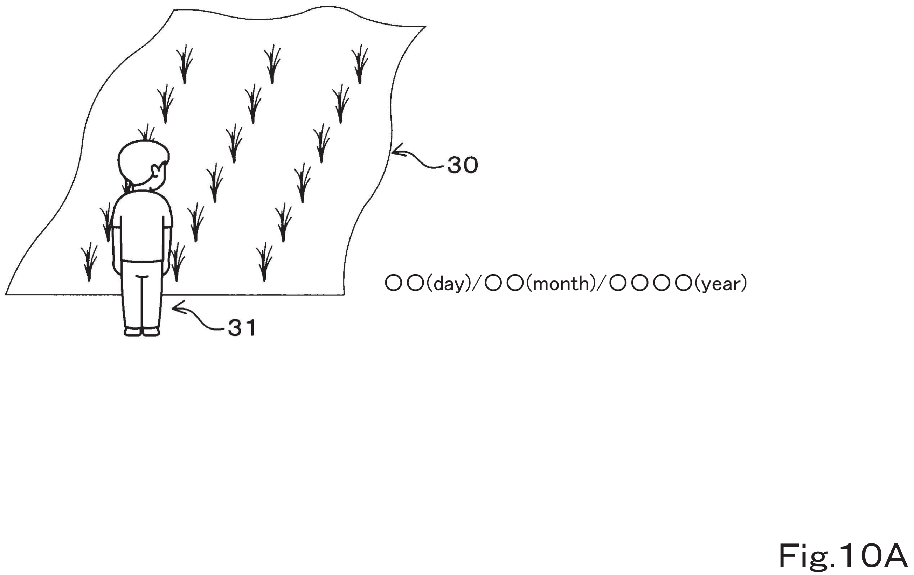

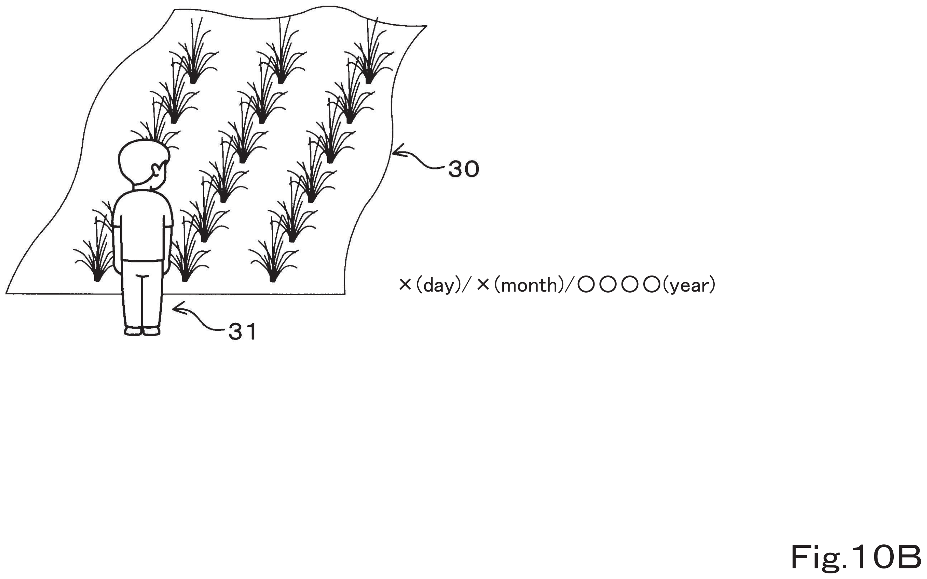

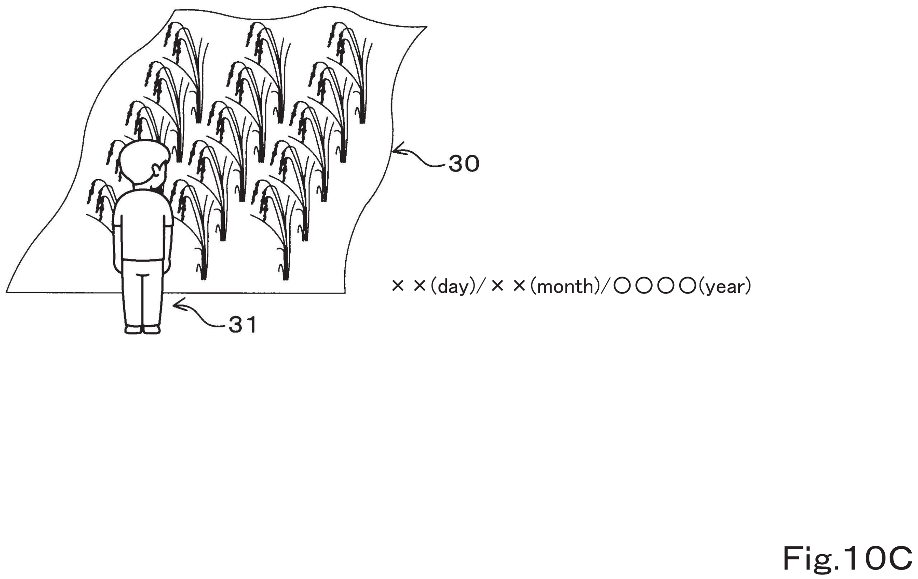

FIGS. 10A to 10C each illustrate an example of an image displayed on the display 14 of the terminal 10 and indicating the growth process of rice. The server 1 transmits each generated image data to the terminal 10 of the user. The controller 11 of the terminal 10, based on each received image data, causes crop object(s) 30a representing crop(s) to be displayed on the agricultural field object 30 representing the agricultural field 1. For example, as shown in FIG. 10A, the display 14 displays an image indicating seedlings of rice with a date, then as shown in FIG. 10B, the display 14 displays an image indicating grown leaves of rice with a date, and then, as shown in FIG. 10C, the display 14 displays an image indicating matured rice with a date.

The server 1 acquires the percentage of sunny hours, the percentage of cloudy hours, the percentage of rainy hours, average temperature, average humidity and/or the like stored in the columns for weather during a first period and during a second period and/or the like included in the agricultural field table T, and calculates the degree of growth of rice based on the percentage of sunny hours, the percentage of cloudy hours and the percentage of rainy hours, the average temperature, the average humidity and/or the like. For example, in the case where the day/month/year when the user wishes to start work is included the first period, the server 1 calculates the degree of growth of rice based on the percentage of sunny hours, the percentage of cloudy hours and the percentage of rainy hours, the average temperature, the average humidity and/pr the like during the first period. When the second period starts after the first period, the server 1 calculates the degree of growth of rice based on the percentage of sunny hours, the percentage of cloudy hours, and the percentage of rainy hours, the average temperature, the average humidity and/or the like during the second period. The percentage of sunny hours, the percentage of cloudy hours, and the percentage of rainy hours, the average temperature, the average humidity and the like correspond to environmental information relating to an environment including weather. That is, the server 1 changes the crop objects 30a representing rice according to changes in the environment. The server 1 transmits image data indicating the changed crop objects 30a to the terminal 10 of the user. The controller 11 of the terminal 10, based on the image data indicating the changed crop objects 30a, causes the display 14 to display the changed crop objects 30a. In other words, the crop objects 30a change in the virtual space according to changes in the environment.

The server 1 acquires the yield map and the fertilizer application map, and, based on the yield map and the fertilizer application map, calculates the degree of growth of rice in each of the sections of the agricultural field object 30 representing the agricultural field 1. For example, since there is a correlation between the amount of fertilizer application and the amount of yield, the server 1 changes the crop objects 30a in the section(s) where a large amount of fertilizer is applied such that the rice grows fast or the number of seeds on ears of rice is large, and changes the crop objects 30a in the section(s) where a small amount of fertilizer is applied such that the rice grows slowly or the number of seeds on ears of rice is small. The server 1 transmits the image data indicating the changed crop objects 30a to the terminal 10 of the user. The controller 11 of the terminal 10, based on the image data indicating the changed crop objects 30a, causes the display 14 to display the changed crop objects 30a. The yield map and the fertilizer application map correspond to production information. That is, the crop objects 30a change in the virtual space based on the production information.

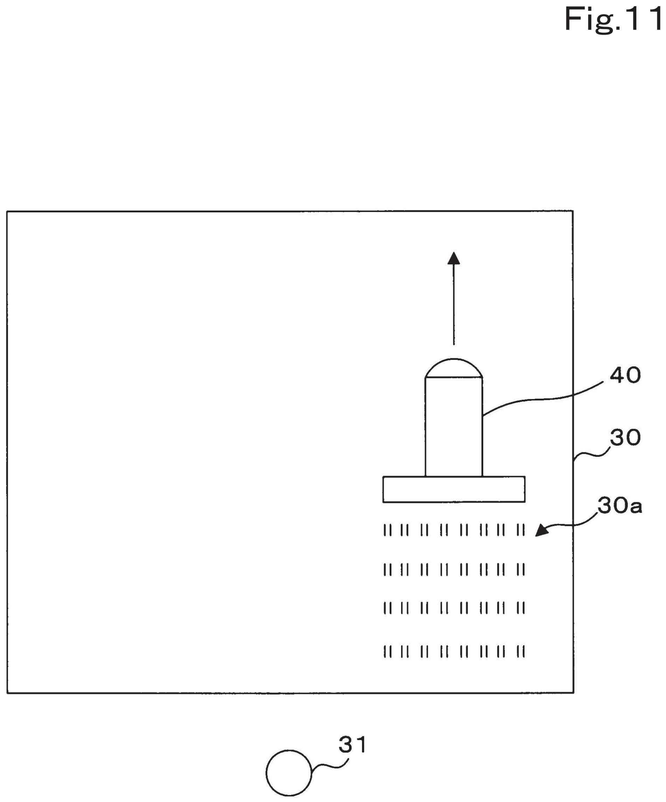

FIG. 11 illustrates an example of an image indicating the agricultural machine object 40 moving in the virtual space and the agricultural field object 30. FIG. 11 is the image seen from the above. For example, in the case where the agricultural machine 1 is a rice transplanter, the server 1 generates the agricultural machine object 40 representing the rice transplanter. The server 1 calculates, based on travel data, the movement of the agricultural machine object 40 relative to the agricultural field object 30, and generates, based on the calculated movement, image data indicating the moving agricultural machine object 40. It is noted that the image data includes video data which is a collection of still images sequential in time. The server 1 calculates the positions of crop objects 30a, i.e., the positions of seedlings planted in the agricultural field object 30, such that the positions are associated with the movement of the agricultural machine object 40, i.e., the movement of the rice transplanter, and generates image data indicating seedlings displayed at the calculated positions. The server 1 stores, in the auxiliary storing unit 4 or the main storing unit 3, the image data indicating the moving agricultural machine object 40 and the image data indicating the crop objects 30a such that they are associated with each other.

The server 1 transmits, to the terminal 10 of the user, the image data indicating the moving agricultural machine object and the image data indicating the crop objects 30a which are associated with each other. As shown in FIG. 11, the controller 11 of the terminal 10, upon receiving the image data indicating the moving agricultural machine object 40 and the image data indicating the crop objects 30a, causes the display 14 to display, based on the image data indicating the moving agricultural machine object 40 and the image data indicating the crop objects 30a, the image indicating the agricultural machine object 40 and the image indicating the crop objects 30a. In other words, the controller 11 causes the display 14 to display the agricultural machine object 40 and the crop objects 30a in the virtual space, and performs, in the virtual space, the movement of the agricultural machine object 40 relative to the agricultural field object 30. In the agricultural field object 30, the crop objects 30a (seedlings of rice) appear as the agricultural field object 30 moves . That is, the agricultural field object 30 and the crop objects 30a change in the virtual space according to the movement of the agricultural machine object 40. Note that, although FIG. 11 illustrates an image seen from the above, the display 14 may display a perspective image. In the case where the agricultural machine object 40 indicates a combine, the crop objects 30a representing rice are reaped as the agricultural machine object 40 moves. In other words, the agricultural field object 30 and the crop objects 30a change in the virtual space according to the movement of the agricultural machine object 40.

**In** the above-described simulation process, although the server 1 performs a simulation of the growth process of rice in the agricultural field 1 with time based on the selections of the user, the day/month/year when the user wishes to start work, and information in the agricultural field table T, the terminal 10 may perform the simulation of the growth process of rice in the agricultural field 1 with time based on the selections of the user, the day/month/year when the user wishes to start work, and information in the agricultural field table T. In the case where the terminal 10 performs the simulation, the terminal 10 generates pieces image data indicating growth states of rice, acquires the percentage of sunny hours, the percentage of cloudy hours, and the percentage of rainy hours, the average temperature, the average humidity and/or the like in the columns for weather during the first period and during the second period in the agricultural field table T, and calculates the degree of growth of rice based on the percentage of sunny hours, the percentage of cloudy hours, and the percentage of rainy hours, the average temperature, the average humidity and/or the like. The terminal 10 changes the crop objects 30a representing rice according to changes in the environment, and causes the display 14 to display the changed crop objects 30a based on the image data indicating the changed crop objects 30a.

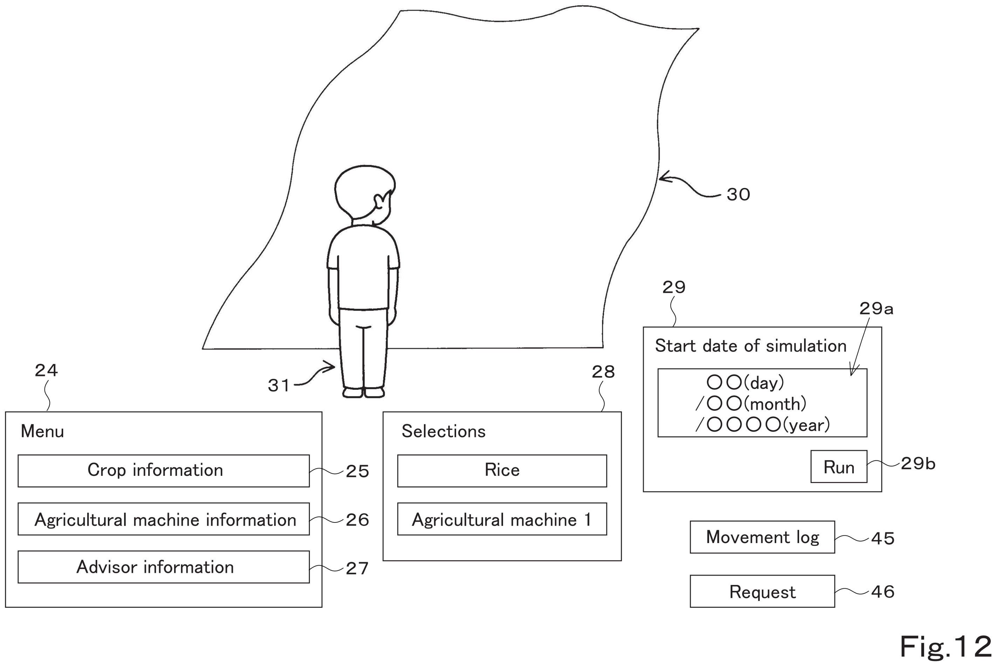

FIG. 12 illustrates an example of an image displayed on the display 14 when the simulation is ended. When the simulation is ended, the controller 11 of the terminal 10 of the user causes the display 14 to display a movement log button 45 and a request button 46. The server 1 stores, in time series in the auxiliary storing unit 4 or the main storing device 3, parameter(s) such as the travel speed, torque supplied to the working device, the direction of travel and/or the like of the agricultural machine object 40 moved in the simulation. When the user operates the movement log button 45, the terminal 10 of the user acquires the parameters of the agricultural machine object 40 from the server 1. The terminal 10 displays the parameters (not shown) in time series, and a back button (not shown) on the display 14. The user can check the parameters of the agricultural machine object 40 and check whether there is an anomaly. When the user operates the back button, the display 14 returns to the screen shown in FIG. 12.

The image data indicating the movement log button 45 and the request button 46 is generated by the control program in the server 1 or the application program in the terminal 10. When the image data is generated by the control program in the server 1, the image data is transmitted to the terminal 10. The controller 11, based on the generated image data, causes the display 14 to display the movement log button 45 and the request button 46. Instead of the server 1, the terminal 10 may store, in time series in the auxiliary storing unit 13 or the main storing unit 12, the parameters such as the travel speed, the torque supplied to the working device and the direction of travel and the like of the agricultural machine object 40 moved in the simulation. When the user operates the movement log button 45, the terminal 10 of the user causes the display 14 to display the stored agricultural machine object 40 and the back button (not shown).

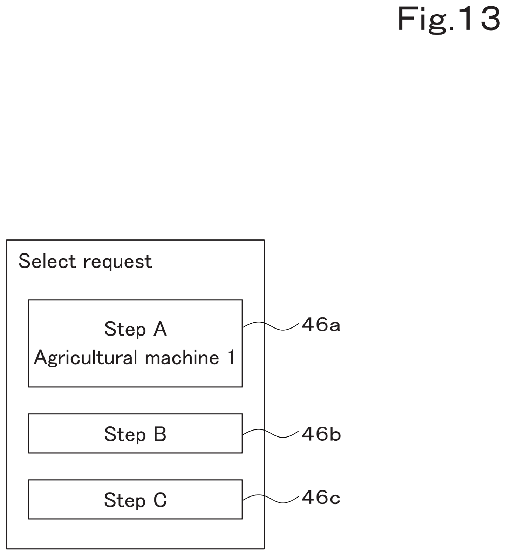

FIG. 13 illustrates an example of a screen displayed on the display 14 when the request button 46 is operated. As described above, the agricultural field object 30 corresponds to the performed agricultural field. The request button 46 is used to ask another person to perform work indicated by the simulation in the actual agricultural field that corresponds to the agricultural field object 30. The auxiliary storing unit 4 of the server 1 stores person(s) to perform work on behalf of the user in the actual agricultural field (hereinafter "agent(s)") in advance. It is noted that the user may perform work in the agricultural field by themselves instead of requesting an agent to perform work.

When the user operates the request button 46, for example, as shown in FIG. 13, the display 14 displays a step button 46a indicating a step A and the agricultural machine 1, a step button 46b indicating a step B, and a step button 46c indicating a step C. For example, the step A is rice transplanting, the step B is weeding, the step C is harvesting, and the agricultural machine 1 is a rice transplanter. Displaying the step A and the agricultural machine 1 together indicates to perform the step A using the agricultural machine 1. In the present example embodiment, the user has selected the agricultural machine 1 before starting the simulation, so that the agricultural machine 1 is displayed with the step A. In the case where the user has not selected the agricultural machine 1 before starting the simulation, the agricultural machine 1 is not displayed. The image data indicating the step buttons 46a to 46c is generated by the control program in the server 1 or the application program in the terminal 10. When the image data is generated by the control program in the server 1, the image data is transmitted to the terminal 10. The controller 11, based on the generated image data, causes the display 14 to display each of the step buttons 46a to 46c.

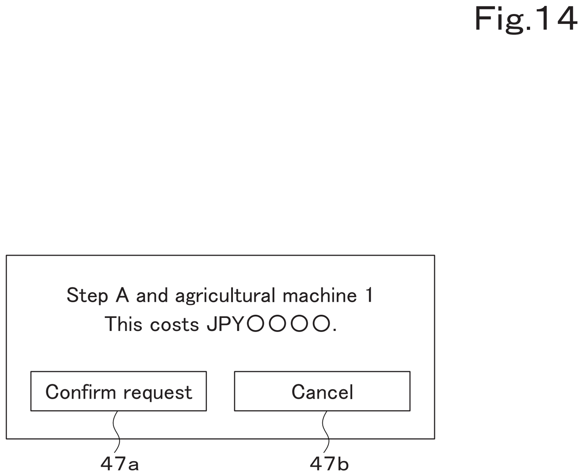

FIG. 14 illustrates an example of a screen displayed on the display 14 when the step button indicating the step A and the agricultural machine 1 is operated. When the user operates the request button 46, for example, as shown in FIG. 14, the display 14 displays the details of the operated step button ("step A and agricultural machine 1"), fee, a confirm request button 47a and a cancel button 47b. The user checks the fee and operates the confirm request button or the cancel button. When the user operates the cancel button, the display 14 returns to the screen shown in FIG. 12. The image data indicating the details of the operated step button, the fee, the confirm request button 47a, and the cancel button 47b is generated by the control program in the server 1 or the application program in the terminal 10. When the image data is generated by performing the control program in the server 1, the image data is transmitted to the terminal 10. The controller 11, based on the generated image data, causes the display 14 to display the details of the operated step button, the fee, the confirm request button 47a, and the cancel button 47b.

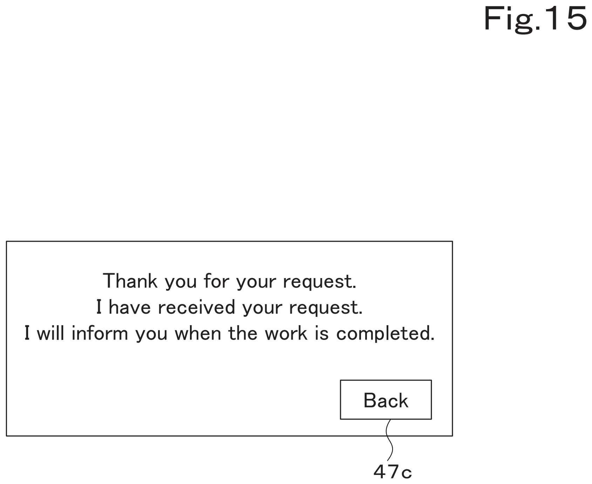

FIG. 15 illustrates an example of a screen displayed on the display 14 when the confirm request button is operated. When the user operates the confirm request button, the controller 2 of the server 1 provides a notification indicating the request to the agent. The agent owns the terminal 10 on which the application program is installed. When the agent operates the terminal 10 to transmit the information indicating that the agent accepts the request to the server 1, the server 1 provides a notification indicating that the request is confirmed to the terminal 10 of the user. For example, as shown in FIG. 15, when receiving the notification, the controller 11 of the terminal 10 of the user causes the display 14 to display an acceptance screen indicating that the request has been accepted and that the user will be contacted when the requested work is completed, and a back button 47c. When the user operates the back button 47c, the display 14 returns to the screen shown in FIG. 12. The image data indicating that the request has been accepted, and indicating that the user will be contacted when the requested work is completed, and indicating the back button 47c is generated by the control program in the server 1 or the application program in the terminal 10. When the image data is generated by performing the control program stored in the server 1, the image data is transmitted to the terminal 10. The controller 11, based on the generated image data, causes the display 14 to display an indication that the request has been accepted and that the user will be contacted when the requested work is completed, and the back button 47c.

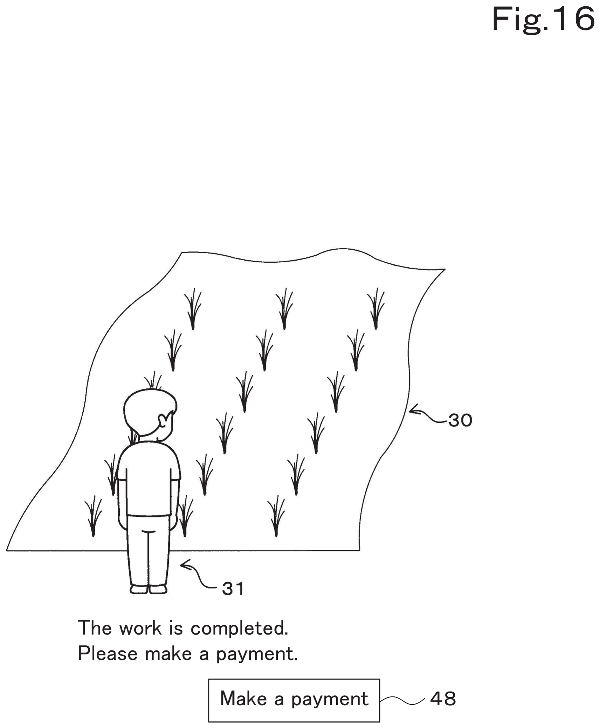

FIG. 16 illustrates an example of a screen displayed on the display 14 when the work performed by the agent is completed. When the agent completes the work (rice transplanting) in the actual agricultural field 1, the agent inputs the information indicating that the work is completed into the terminal 10 of the agent. The server 1 transmits, to the terminal 10 of the user, the received information and data indicating the agricultural field object 30 in which the work is completed. The controller 11 of the terminal 10 of the user, when receiving the information and the data indicating the agricultural field object 30, causes the display 14 to display an accept button (not shown). For example, as shown in FIG, 16, when the user operates the accept button, the controller 11 of the terminal 10 of the user causes the display 14 to display the agricultural field object 30, the avatar 31 representing the user, a make-payment button 48 and a message indicating that the work is completed and a request for a payment. It is noted here that the agricultural field object 30 differs from what it was before work was requested. For example, in the case where the requested work is rice transplanting, and seedlings are not planted when the work is requested, the agricultural field object 30 changes to the state in which seedlings are planted. The image data indicating the agricultural field object 30, the avatar 31, the make-payment button 48 and the message indicating that the work is completed and a request for a payment is generated by the control program in the server 1 or the application program in the terminal 10. When the image data is generated by the control program in the server 1, the image data is transmitted to the terminal 10. The controller 11, based on the generated image data, causes the display 14 to display the agricultural field object 30, the avatar 31, the make-payment button 48 and the message indicating that the work is completed and a request for a payment.

It is noted that the agent may input a photograph (image data) of the agricultural field 1 in which the work is completed into the terminal 10 of the agent. The terminal 10 of the agent includes an imager, such as a camera, and the imager captures an image of the agricultural field 1. The terminal 10 transmits the information and the photograph to the server 1. The server 1 transmits the received information and the photograph to the terminal 10 of the user. The controller 11 of the terminal 10 of the user receives the information and the photograph, and, when the user operates the accept button, causes the display 14 to display the photograph with or instead of the agricultural field object 30.

When the user operates the make-payment button 48, the terminal 10 of the user transmits an instruction to start a payment process to the server 1. The make-payment button 48 functions as a receiver to receive a payment. Upon receiving the instruction to start a payment process, the server 1 performs a payment process for the use of the agricultural machine 1 and the work for the step A. Specifically, the server 1 charges a credit card company the fee shown in FIG. 14 or withdraws the fee shown in FIG. 14 from the user's bank account. The server 1 stores, in advance, information required to perform a payment process such as the user's credit card number and the user's bank account. Note that, after the user operates the make-payment button 48, the controller 11 of the terminal 10 of the user may cause the display 14 to display a screen to receive input of the information required to perform a payment process. The input information required to perform a payment process is transmitted to the server 1, and the server 1 performs the payment process. After the payment process is completed, the server 1 transmits information indicating that the payment is completed to the terminal 10 of the user. Upon receiving the information indicating that the payment is completed, the controller 11 of the terminal 10 causes the display 14 to display the information indicating that the payment is completed (not shown).

After the application program is activated, the display 14 always displays an end button (not shown). When the user operates the end button, the application program is forcibly terminated. The forcible termination is performed as an interrupt.

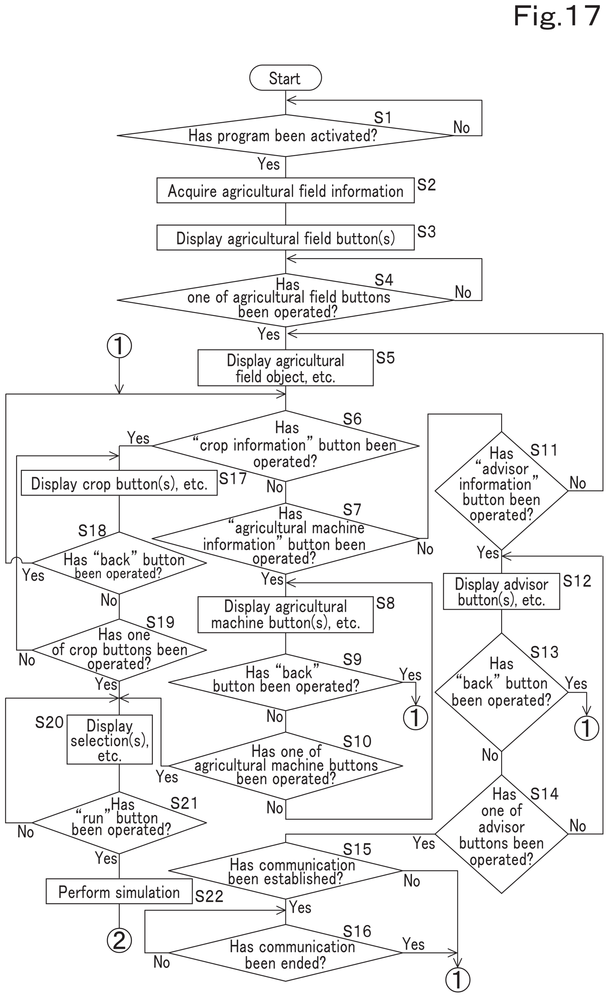

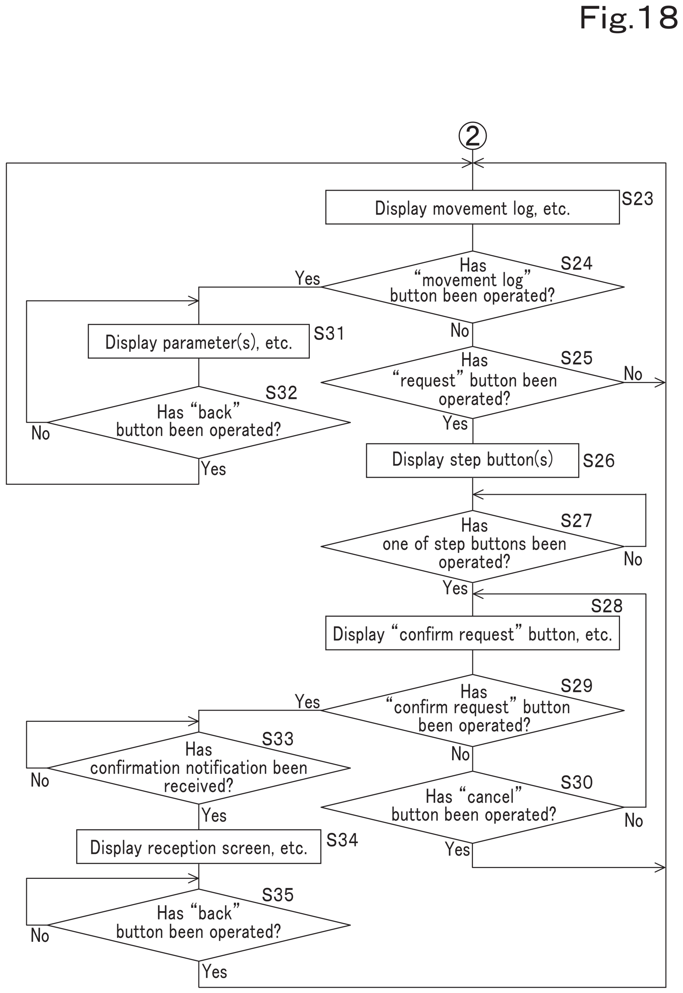

FIGS. 17 and 18 are flowcharts to illustrate a display process to display a virtual space on the display 14 of the terminal 10 of the user. The controller 11 of the terminal 10 of the user (hereinafter simply "controller 11") determines whether or not the application program is activated (S1). When the application program is not activated (NO at S1), the controller 11 repeats step S1. When the application program is activated (YES at S1), the controller 11 acquires information in the agricultural field table T, i.e., information indicating candidate(s) of agricultural field(s) for rent (S2).

The controller 11 causes the display 14 to display the agricultural field buttons (S3, see FIG. 6), and determines whether or not any of the agricultural field buttons is operated (S4). When determining that no agricultural field buttons are operated (NO at S4), the controller 11 repeats step S4. When determining that no agricultural field buttons are operated (YES at S4), the controller 11 causes the display 14 to display the agricultural field object 30, the avatar 31 representing the user, and the menu screen 24 (S5, see FIG. 7).

The controller 11 determines whether or not the crop information button 25 is operated (S6). When determining that the crop information button 25 is not operated (NO at S6), the controller 11 determines whether or not the agricultural machine information button 26 is operated (S7). When determining that the agricultural machine information button 26 is not operated (NO at S7), the controller 11 determines whether or not the advisor information button 27 is operated (S11). When determining that the advisor information button 27 is not operated (NO at S11), the controller 11 returns to step S5.

At step S6, when it is determined that the crop information button 25 is operated (YES at S6), the controller 11 causes the display 14 to display the crop buttons 25a to 25d and the back button 25e (S17, see FIG. 8A), and determines whether or not the back button 25e is operated (S18). When determining that the back button 25e is operated (YES at S18), the controller 11 returns to step S6. When determining that the back button 25e is not operated (NO at S18), the controller 11 determines whether or not any of the crop buttons 25a to 25d is operated (S19). When determining that no buttons 25a to 25d are operated (NO at S19), the controller 11 returns to step S17. When determining that one of the crop buttons 25a to 25d is operated (YES at S19), i.e., when the user selects a type of crop that the user wishes to grow, the controller 11 causes the display 14 to display the selection, i.e., the selected crop (S20, see FIG. 9).

At step S7, when determining that the agricultural machine information button 26 is operated (YES at S7), the controller 11 causes the display 14 to display the agricultural machine buttons 26a to 26c and the back button 26d (S8, see FIG. 8), and determines whether or not the back button 26d is operated (S9). When determining that the back button 26d is operated (YES at S9), the controller 11 returns to step S6. When determining that the back button 26d is not operated (NO at S9), the controller 11 determines whether or not any of the agricultural machine buttons 26a to 26c is operated (S10). When determining that no agricultural machine buttons 26a to 26c are operated (NO at S10), the controller 11 returns to step S8. When determining that one of the agricultural machine buttons 26a to 26c is operated (YES at S10), i.e., when the user selects an agricultural machine that the user wishes to use, the controller 11 causes the display 14 to display the selection, i.e., the selected agricultural machine (S20, see FIG. 9).

At step S11, when determining that the advisor information button 27 is operated (YES at S11), the controller 11 causes the display 14 to display the advisor buttons 27a to 27c and the back button 27d (S12), and determines whether or not the back button 27d is operated (S13). When determining that the back button 27d is operated (YES at S13), the controller 11 returns to step S6. When determining that the back button 27d is not operated (NO at S13), the controller 11 determines whether or not any of the advisor buttons 27a to 27c is operated (S14). When determining that no advisor buttons are operated (NO at S14), the controller 11 returns to step S12.

When determining that one of the advisor buttons 27a to 27c is operated (YES at S14), i.e., when the user selects one of the advisors that the user wishes to have advice from, the controller 11 determines whether or not a bidirectional communication between the terminal 10 of the advisor and the terminal 10 of the user is established (S15). When determining that the bidirectional communication is not established (NO at S15), the controller 11 causes the display 14 to display an indication that the bidirectional communication cannot be established, and then returns to step S6. When determining that the bidirectional communication is established (YES at S15), the controller 11 determines whether or not the bidirectional communication is ended (S16). When determining that the bidirectional communication is not ended (NO at S16), the controller repeats step S16. When determining that the bidirectional communication is ended (YES at S16), the controller 11 returns to step S6.

At step S20, after causing the display 14 to display the selection, the controller 11 determines whether or not the run button 29b is operated (S21, see FIG. 9). When the run button 29b is not operated (NO at S21), in the case where the crop information button 25, the agricultural machine information button 26 or the advisor information button 27 is not operated, the controller 11 returns to step 20 (see FIG. 9). Note that, at step S21, when the run button is not operated but the crop information button 25, the agricultural machine information button 26 or the advisor information button 27 is operated, the controller 11 performs the steps similar to steps S17 to S19, S8 to S10, or S12 to S16. At these steps, when the back button 25e, 26d, or 27d is operated (YES at S18, YES at S9, or YES at S13), when the bidirectional communication is not established (NO at S15), or when the bidirectional communication is ended (YES at S16), the controller 11 returns to step S20 instead of step S6 (see FIG. 7).

At step S21, when determining that the run button 29b is operated (YES at S21), the controller 11 causes the agricultural machine object 40 and the crop objects 30a to be displayed on the agricultural field object 30, and the server 1 performs a simulation to indicate the growth process of crops (S22, see FIGS. 10A to 10C and 11). Note that the terminal 10 may perform the simulation instead of the server 1.

The controller 11, after the simulation ends, causes the display 14 to display the movement log button 45 and the request button 46 (S23), and determines whether or not the movement log button 45 is operated (S24). When determining that the movement log button 45 is operated (YES at S24), the controller 11 causes the display 14 to display parameter(s) (not shown) (S31), and determines whether or not the back button (not shown) is operated (S32). When determining that the back button is not operated (NO at S32), the controller 11 returns to step S31. When determining that the back button is operated (YES at S32), the controller 11 returns to step S23.

At step S24, when determining that the movement log button 45 is not operated (NO at S24), the controller 11 determines whether or not the request button 46 is operated (S25). When determining that the request button 46 is not operated (NO at S25), the controller 11 returns to step S23. When determining that the request button 46 is operated (YES at S25), the controller 11 causes the display 14 to display step button(s) (S26, see FIG. 13), and determine whether or not any of the step buttons is operated (S27). When determining that no step buttons are operated (NO at S27), the controller 11 repeats step S27. At step S27, when determining that one of the step buttons is operated (YES at S27), the controller 11 causes the display 14 to display the details of the operated one of the step buttons, fee, the confirm request button, and the cancel button (S28, see FIG. 14), and determines whether or not the confirm request button is operated (S29).

When determining that the confirm request button is not operated (NO at S29), the controller 11 determines whether or not the cancel button is operated (S30). When determining that the cancel button is not operated (NO at S30), the controller 11 returns to step S28. At step S30, when determining that the cancel button is operated (YES at S30), the controller 11 returns to step S23.

At step S29, when determining that the confirm request button is operated (YES at S29), the controller 11 determines whether or not a notification indicating that the request is confirmed is received (S33). When determining that the notification indicating that the request is confirmed is not received (NO at S33), the controller repeats step S33. At step S33, when determining that the notification indicating that the request is confirmed is received (YES at S33), the controller 11 causes the display 14 to display the acceptance screen and the back button 47c (S34). The controller 11 determines whether or not the back button 47c is operated (S35). When determining that the back button 47c is not operated (NO at S35), the controller 11 repeats step S35. At step S35, when determining that the back button 47c is operated (YES at S35), the controller 11 returns to step S23.

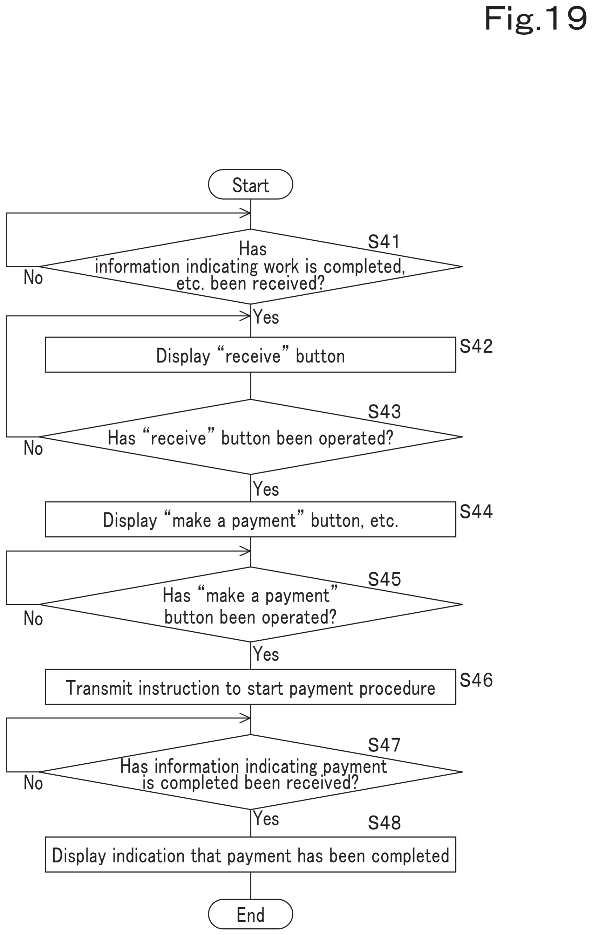

FIG. 19 is a flowchart illustrating a payment process to be performed when the work performed by the agent is completed. The controller 11 determines whether or not information indicating that the work performed by the agent is completed and the agricultural field object 30 in which the work is completed are received (S41). When determining that the information or the agricultural field object 30 is not received (NO at S41), the controller 11 repeats step S41. At step S41, when determining that the information and the agricultural field object are received (YES at S41), the controller 11 causes the display 14 to display the accept button (not shown) (S42), and determines whether or not the accept button is operated (S43). When determining that the accept button is not operated (NO at S43), the controller 11 returns to step S42.

At step S43, when determining that the accept button is operated (YES at S43), the controller 11 causes the display 14 to display the agricultural field object, the avatar 31 representing the user, the make-payment button 48 and a message indicating that the work is completed and a request for a payment (S44, see FIG. 16). The controller 11 determines whether or not the make-payment button 48 is operated (S45). When determining that the make-payment button 48 is not operated (NO at S45), the controller 11 repeats step S45. When determining that the make-payment button 48 is operated (YES at S45), the controller 11 transmits an instruction to start a payment process to the server 1 (S46), and determines whether or not the controller 11 has received the information indicating that the payment is completed from the server 1 (S47). When determining that the controller 11 has not received the information indicating that the payment is completed (NO at S47), the controller 11 repeats step S47.

When determining that the controller 11 has received the information indicating that the payment is completed (YES at S47), i.e., when the server 1 has completed the payment process, the controller 11 causes the display 14 to display the information indicating that the payment is completed (not shown) (S48), and ends the process.

The agricultural support system according to the example embodiment 1 displays the agricultural field object 30 in the virtual space. The agricultural field object 30 corresponds to an agricultural field, for example, the agricultural field 1 that the user rents from someone else. It is possible for the user, before performing work in the actual agricultural field, to check each step relating to agricultural work through the agricultural field object 30.

The agricultural machine object 40 is displayed in the virtual space. The user inputs an operation relating to the agricultural machine object 40. The agricultural machine object 40 moves on the agricultural field object 30, and the agricultural field object 30 changes according to the movement of the agricultural machine object 40.

The crop object(s) 30a is/are displayed on the agricultural field object 30. The user inputs an operation relating to the agricultural machine object 40. The agricultural machine object 40 moves on the agricultural field object 30, and the crop objects 30a change according to the movement of the agricultural machine object 40.

When the movement of the agricultural machine object 40 is performed, a payment for actual use of the agricultural machine in the actual agricultural field is received. It is possible for the user to request an agent (another person) to perform work using the agricultural machine in the actual agricultural field.

It is possible to output the movement log of the agricultural machine object 40. It is possible for the user to check the movement log and change the settings of the agricultural machine.

Since the crop objects 30a change in the virtual space according to changes in the environment including weather, it is possible for the user to know the growth process of crops reflective of changes in environment.

Since the crop objects 30a in the virtual space change based on the production information including the amount of fertilizer application or yield of crops, it is possible for the user to know the growth process of crops reflective of the production information. Example Embodiment 2

The following discusses the present invention based on drawings indicating an agricultural support system according to an example embodiment 2. The same features of the example embodiment 2 as those of the example embodiment 1 are assigned identical reference signs, and the detailed description thereof is omitted. When the user operates one of the agricultural field buttons to select one of the agricultural fields, the controller 11 of the terminal 10 of the user causes the avatar 31 representing the user and the agricultural field object 30 representing the selected agricultural field to be displayed in the virtual space (see the step S5 shown in FIG. 17). When the user operates the advisor information button 27 to call one of the advisors, the controller 11 of the terminal 10 of the user causes the avatar 32 representing the called advisor to be displayed in the virtual space.

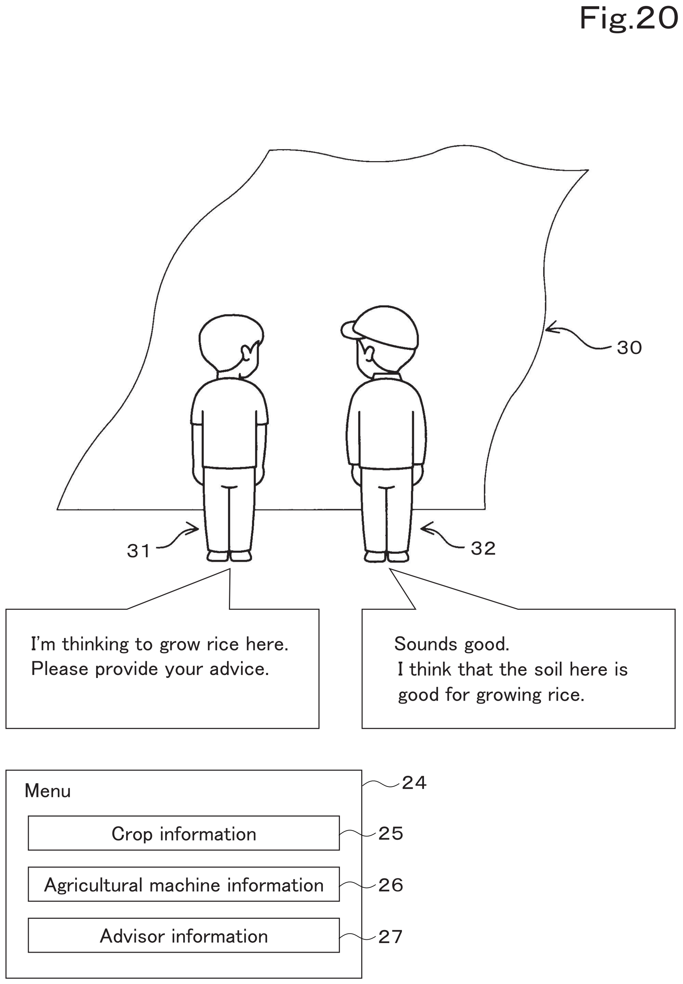

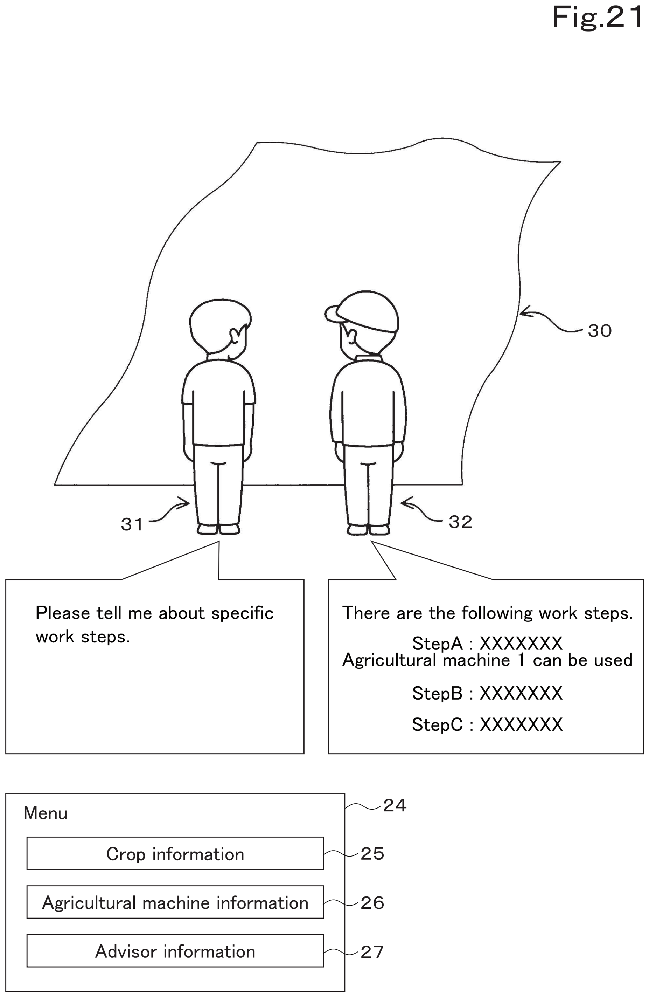

FIGS. 20 and 21 each illustrate an example of a screen displayed when the button 21 indicating agricultural field 1 is operated and an advisor A is called. When the user operates the button 21 indicating the agricultural field 1 (see FIG. 6), the controller 11 of the terminal 10 of the user causes the display 14 to display the agricultural field object 30 representing the agricultural field 1 and the avatar 31 representing the user, i.e., to display the agricultural field object 30 and the avatar 31 in the virtual space. When the user operates the advisor button 27a indicating the advisor A (see FIG. 8C), the controller 11 of the terminal 10 of the user establishes a bidirectional communication with the terminal 10 of the advisor A, and causes the display 14 to display the avatar 32 in the virtual space.

As shown in FIGS. 20 and 21, in the virtual space, the avatar 31 representing the user and the avatar 32 representing the advisor A are displayed such that the avatars 31, 32 face the agricultural field object 30. The avatar 31 representing the user and the avatar 32 representing the advisor A can communicate with each other. For example, the avatars 31, 32 can send messages to each other. Note that sound, images, or videos may be sent to each other. The user can send a question to the advisor A, and the advisor A can answer the question. The image data indicating the agricultural field object 30, the avatars 31, 32 and the menu screen 24 is generated by the control program in the server 1 or the application program in the terminal 10. When the image data is generated by the control program in the server 1, the image data is transmitted to the terminal 10. The controller 11, based on the generated image data, causes the display 14 to display the agricultural field object 30, the avatars 31, 32 and the menu screen 24.

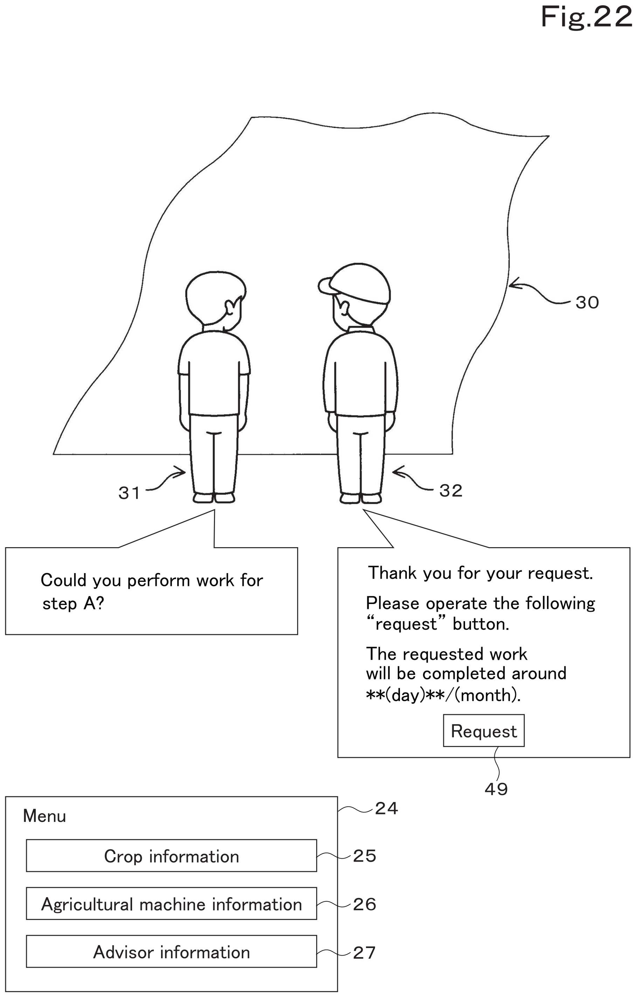

FIG. 22 illustrates an example of a screen displayed when the user requests the advisor to perform work. For example, the user requests the advisor to perform work of the step A via a message. The advisor can reply via a message. The advisor inputs information indicating the step A and the agricultural machine 1 into the terminal 10, to cause the display 14 of the terminal 10 of the user to display the reply via a message and the request button 49. For example, the terminal 10 of the advisor transmits, to the terminal 10 of the user via the server 1, an instruction to display the request button, the information indicating the step A and the agricultural machine 1, and a fee for the work of the step A using the agricultural machine 1. The controller 11 of the terminal 10 of the user, when receiving the instruction to display the request button, causes the display 14 to display the request button 49. The image data indicating the request button 49 is generated by the control program in the server 1 or the application program in the terminal 10. When the image data is generated by the control program in the server 1, the image data is transmitted to the terminal 10. The controller 11, based on the generated image data, causes the display 14 to display the request button 49. When the user operates the request button 49, the display 14 displays a screen similar to that shown in FIG. 14. When the user operates the confirm request button after checking the fee, the display 14 displays a screen similar to that shown in FIG. 15, and the request to the advisor is confirmed. The advisor performs the requested work in the actual agricultural field 1.

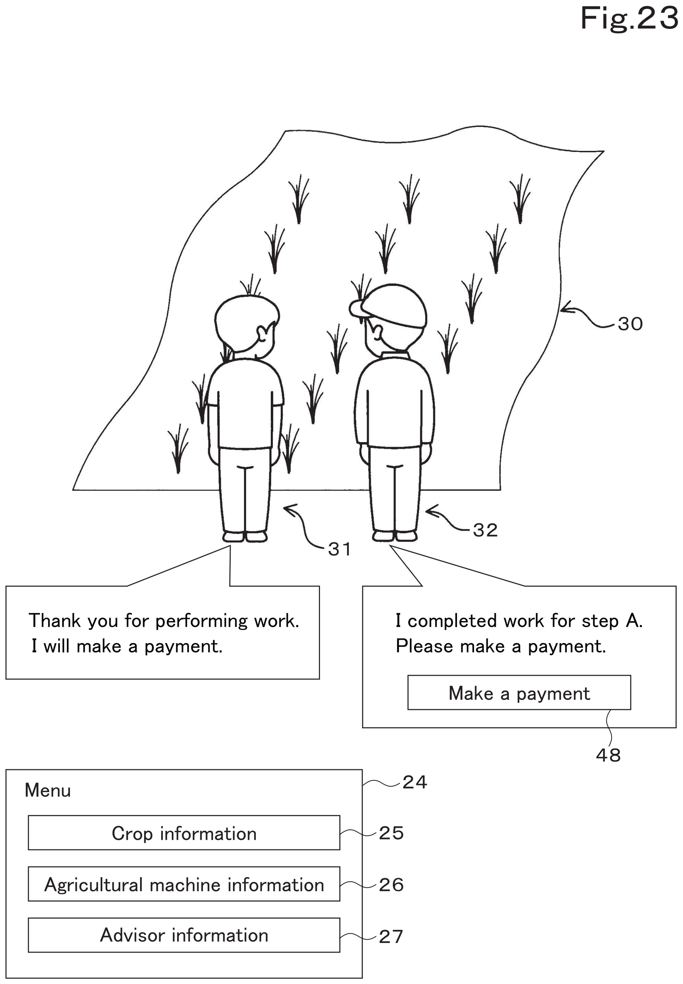

FIG. 23 illustrates an example of a screen displayed on the display 14 when the work performed by the advisor is completed. When the advisor completes the work (for example, rice transplanting) in the actual agricultural field 1, the advisor inputs information indicating that the work is completed into the terminal 10 of the advisor. The server 1 transmits, to the terminal 10 of the user, the received information and data indicating the agricultural field object 30 in which the work is completed. The controller 11 of the terminal 10 of the user, when receiving the information and the data indicating the agricultural field object 30, causes the display 14 to display the accept button (not shown). For example as shown in FIG. 23, when the user operates the accept button, the controller 11 of the terminal 10 of the user causes the display 14 to display the agricultural field object 30, the avatar 31 representing the user, the make-payment button 48, and a message indicating that the work is completed and a request for a payment. It is noted here that the agricultural field object 30 differs from what it was when the work was requested. For example, in the case where the requested work is rice transplanting, and seedlings are not planted when the work is requested, the agricultural field object 30 changes to the state in which seedlings are planted. The image data indicating the make-payment button 48 and the message indicating that the work is completed and the request for a payment is generated by the control program in the server 1 or the application program in the terminal 10. When the image data is generated by the control program in the server 1, the image data is transmitted to the terminal 10. The controller 11, based on the generated image data, causes the display 14 to display the make-payment button 48 and the message indicating that the work is completed and the request for a payment.

The advisor may input, into the terminal 10 of the advisor, a photograph (image data) indicating the agricultural field 1 in which the work is completed. The terminal 10 of the advisor includes an imager such as a camera, and the imager captures an image of the agricultural field 1. The terminal 10 of the advisor transmits the information and the photograph to the server 1. The server 1 transmits the received information and the received photograph to the terminal 10 of the user. When the terminal 10 of the user receives the information and the photograph and the user operates the accept button, the controller 11 of the terminal 10 of the user causes the display 14 to display the photograph with or instead of the agricultural field object 30.

The user can input a message, such as gratitude for the work, into the terminal 10 of the user. When the user operates the make-payment button 48, the terminal 10 of the user transmits an instruction to start a payment process to the server 1. The make-payment button 48 functions as a receiver to receive a payment. When receiving the instruction to start the payment process, the server 1 performs the payment process for the use of the agricultural machine 1 and the work for the step A. Specifically, the server 1 charges the credit card company the fee shown in FIG. 14 or withdraws the fee shown in from the user's bank account. The server 1 stores, in advance, the information required for the payment process such as the user's credit card number and the user's bank account. Note that, after the user operates the make-payment button 48, the controller 11 of the terminal 10 of the user may cause the display 14 to display a screen for the user to input the information required for the payment process. The input information required for the payment process is transmitted to the server 1, and the server 1 performs the payment process. After the payment process is completed, the server 1 transmits information indicating that the payment is completed to the terminal 10 of the user. When receiving the information indicating that the payment is completed, the controller 11 of the terminal 10 causes the display 14 to display the information indicating that the payment is completed (not shown).

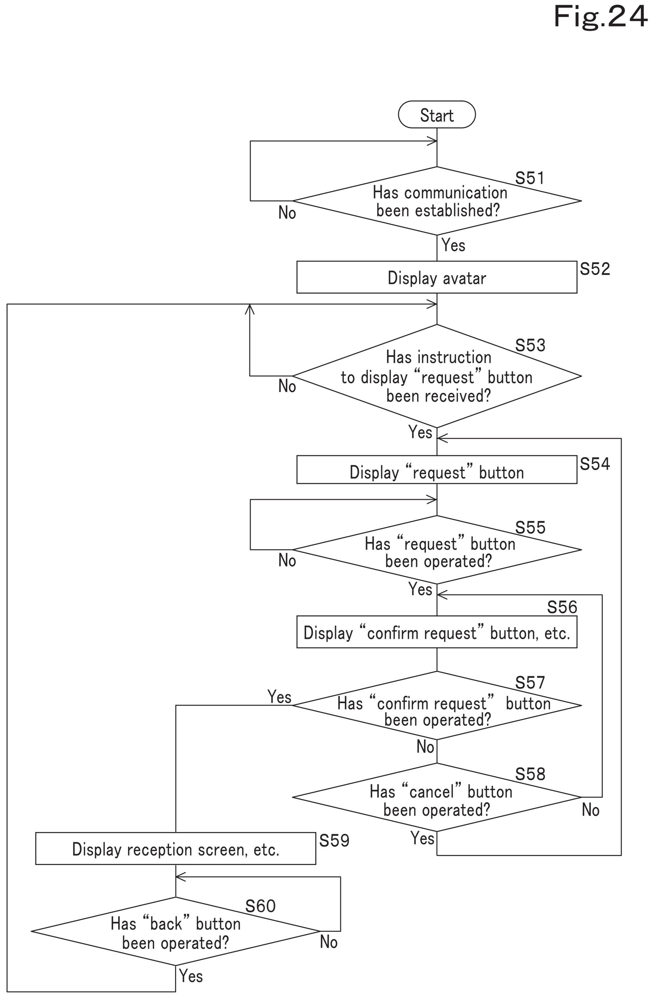

FIG. 24 is a flowchart illustrating a display process to cause the display 14 of the terminal 10 of the user to display the virtual space. Assume here that the display 14 of the terminal 10 of the user displays the agricultural field object 30 representing the agricultural field 1 and the avatar 31 representing the user, and the user has operated the advisor button 27a indicating the advisor A.

The controller 11 of the terminal 10 of the user (hereinafter simply "controller 11") determines whether or not a bidirectional communication between the terminal 10 of the advisor and the terminal 10 of the user is established (S51). When determining that the bidirectional communication is not established (NO at S51), the controller 11 repeats step S51. In the case where the bidirectional communication is still not established for a predetermined time after the start of the bidirectional communication establishing process, the controller 11 may end the bidirectional communication establishing process and return to the screen shown in FIG. 7.

When determining that the bidirectional communication is established (YES at S51), the controller 11 causes the display 14 to display the avatar 32 representing the advisor (S52). The user and the advisor A can communicate with each other in the virtual space via the avatars 31, 32. For example, the user and the advisor A can send messages to each other.

The controller 11 determines whether or not an instruction to display a request button is received from the terminal 10 of the advisor (S53). When determining that the instruction to display the request button is not received from the terminal 10 of the advisor (NO at S53), the controller 11 repeats step S53. When determining that the instruction to display the request button is received from the terminal of the advisor (YES at S53), the controller 11 causes the display 14 to display the request button 49 (S54), and determines whether or not the request button 49 is operated (S55).

When determining that the request button 49 is not operated (NO at S55), the controller 11 repeats step S55. When determining that the request button is operated (YES at S55), the controller 11 causes the display 14 to display the agricultural field 1 and step A, the fee, the confirm request button, and the cancel button (S56, see FIG. 14), and determines whether or not the confirm request button is operated (S57).

When determining that the confirm request button is not operated (NO at S57), the controller 11 determines whether or not the cancel button is operated (S58). When determining that the cancel button is not operated (NO at S58), the controller 11 returns to step S56. When determining that the cancel button is operated (YES at S58), the controller 11 returns to step S54.

At step S57, when determining that the confirm request button is operated (YES at S57), the controller 11 causes the display 14 to display the acceptance screen and the back button 47c (S59). The controller 11 determines whether or not the back button 47c is operated (S60). When determining that the back button 47c is not operated (NO at S60), the controller 11 repeats step S60. At step S60, when determining that the back button 47c is operated (YES at S60), the controller 11 returns to step S53.

Also in the example embodiment 2, similar to the example embodiment 1, a payment process is performed when the work performed by the advisor is completed. The payment process in the example embodiment 2 is the same as steps S41 to S48 shown in FIG. 19 except that the agent in the description is replaced with the advisor, and therefore the detailed description thereof is omitted.

The agricultural support system according to the example embodiment 2 displays the avatar 32 representing the advisor (agricultural-work-related person) in the virtual space. The user can receive advice relating to the work steps from, for example, the avatar 32 representing a farmer in the virtual space.

It is possible to request the agricultural-work-related person to perform work in the actual agricultural field 1. When the agricultural-work-related person performs the requested work, the agricultural field object 30 changes in the virtual space according the work. Thus, it is possible for the user to intuitively know that the work was performed.

It is possible to request the agricultural-work-related person to perform work in the actual agricultural field 1. When the agricultural-work-related person performs the requested work, a payment to the agricultural-work-related person is performed. Since the payment is received through the application program in the terminal 10, it is possible to perform the payment process easily and reliably.

### Example Embodiment 3

The following discusses the present invention with reference to drawings indicating an agricultural support system according to an example embodiment 3. The same features of the example embodiment 3 as those of the example embodiment 1 or 2 are assigned identical reference signs, and the detailed description thereof is omitted. The display 14 displays the travel route of, for example, the agricultural machine 1 by performing a simulation (see FIG. 11). The user, when having a question about the movement of the agricultural machine 1, operates the advisor information button 27 to call an agricultural-machine-related person, such as an engineer (advisor) B who has experience in dealing with the agricultural machine 1.

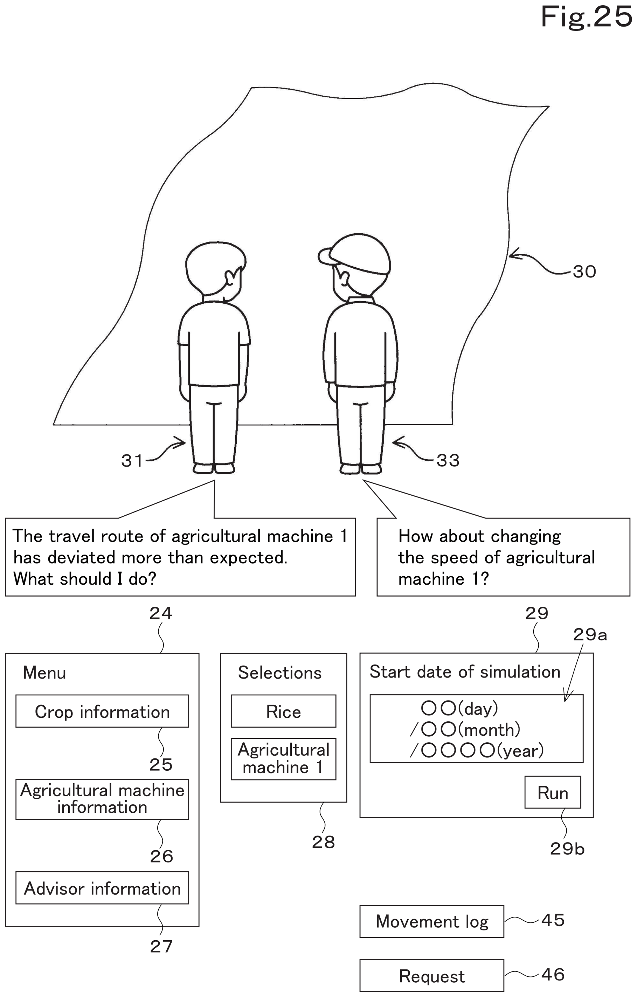

FIG. 25 illustrates an example of a screen displayed when the button 21 of agricultural field 1 is operated and an advisor B is called. When the user operates the button 21 indicating the agricultural field 1 (see FIG. 6), the controller 11 of the terminal 10 of the user causes the display 14 to display the agricultural field object 30 representing the agricultural field 1 and the avatar 31 representing the user in the virtual space. When the user operates the advisor button 27b indicating the advisor B (see FIG. 8C), the controller 11 of the terminal 10 of the user causes the display 14 establishes a bidirectional communication with the terminal 10 of the advisor B, and causes the avatar 33 representing the advisor B to be displayed in the virtual space.

As shown in FIG. 25, the avatar 31 representing the user and the avatar 33 representing the advisor B are displayed in the virtual space such that the avatars 31, 33 face the agricultural field object 30. The avatar 31 representing the user and the avatar 32 representing the advisor B can communicate with each other, for example, send messages to each other. Note that voice, images, or videos may be transmitted to each other. The user can send a question to the advisor B, and the advisor B can answer the question.

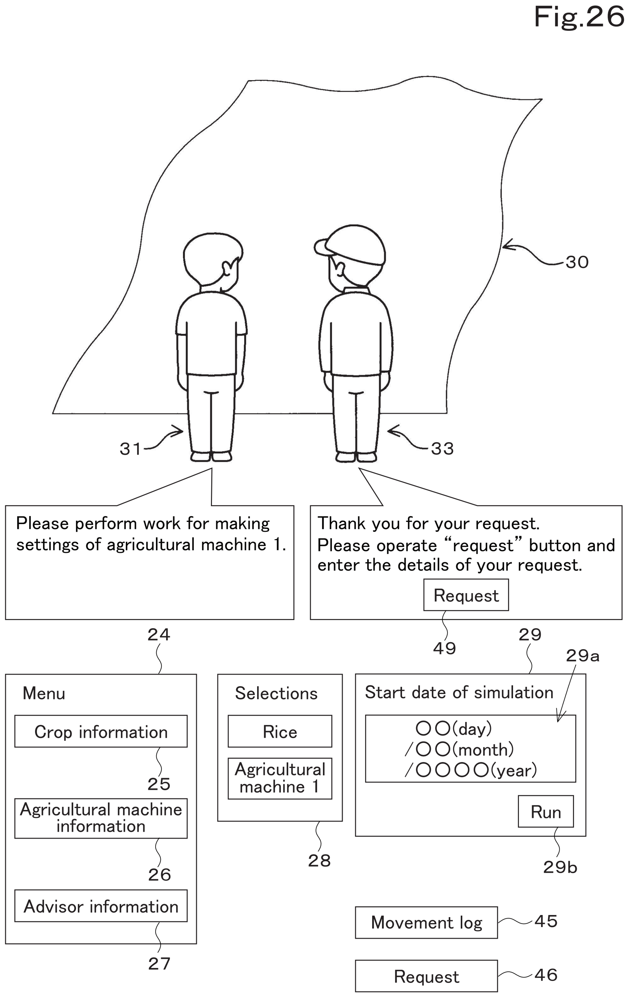

FIG. 26 illustrates an example of a screen displayed when the user requests the advisor to perform work. For example, the user requests the advisor B to perform work of making the settings of the agricultural machine 1 via a message. The advisor can reply via a message. The advisor inputs information indicating the work of making the settings of the agricultural machine 1 into the terminal 10, to cause the display 14 of the terminal 10 of the user to display the reply message and the request button 49. For example, the terminal 10 of the advisor transmits, to the terminal 10 of the user via the server 1, an instruction to display the request button, the information indicating the work for making the settings of the agricultural machine 1, and the fee for the work for making the settings of the agricultural machine 1. The controller 11 of the terminal 10 of the user, upon receiving the instruction to display the request button, causes the display 14 to display the request button 49. When the user operates the request button 49, the work for making the settings of the agricultural machine 1, the fee, the confirm request button, and the cancel button are displayed. That is, the display 14 displays the screen differing from the screen shown in FIG. 14 in that the details of the operated step button (step A and agricultural machine 1) is replaced with the work for making settings of the agricultural machine 1. When the user operates the confirm request button after checking the fee, the display 14 displays a screen similar to that shown in FIG. 15, and the request to the advisor is confirmed. The advisor performs the requested work for the actual agricultural machine 1. The advisor B, for example, changes the settings such as the parameters of the actual agricultural machine 1, such as the travel speed, torque supplied to the working device, and the direction of travel. The advisor B inputs information relating to the changed settings into the terminal 10 of the advisor, and transmits the information to the server 1. The server 1 saves the changed parameters. That is, the server 1 updates the parameters.

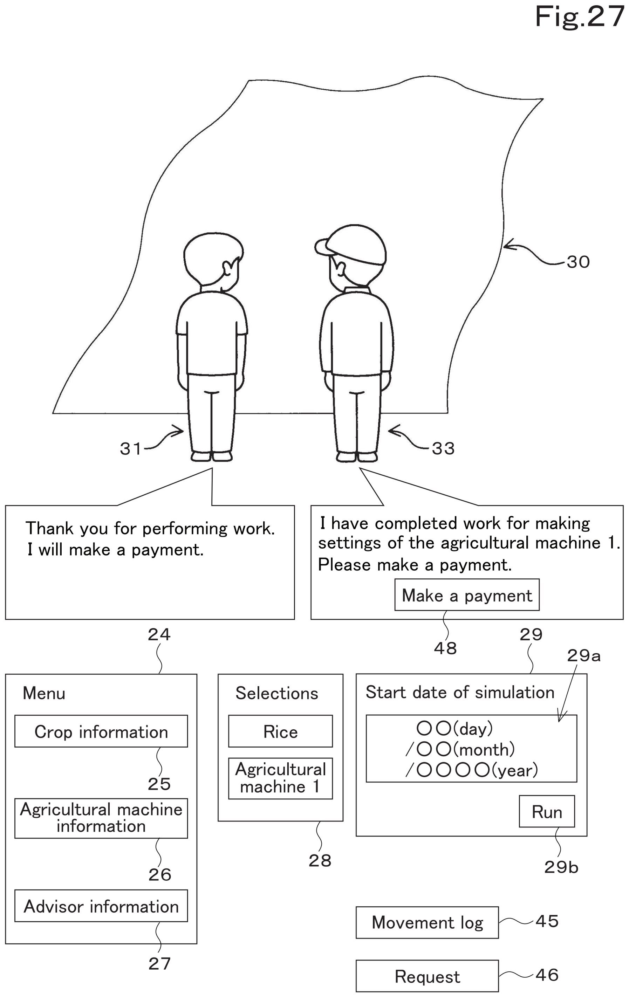

FIG. 27 illustrates an example of a screen displayed on the display 14 when the work performed by the advisor is completed. When the advisor B completes the work for the actual agricultural machine 1, the advisor inputs information indicating that the work is completed into the terminal 10 of the advisor. The server 1 transmits, to the terminal 10 of the user, the received information and data indicating the agricultural field object 30. The controller 11 of the terminal 10 of the user, upon receiving the information and the data indicating the agricultural field object 30, causes the display 14 to display the accept button (not shown). When the user operates the accept button, for example, as shown in FIG. 27, the controller 11 of the terminal 10 of the user causes the display 14 to display the agricultural field object 30, the avatar 31 representing the user, the make-payment button 48, and a message indicating that the work is completed and a request for a payment.

It is noted here that, as shown in FIG. 27, the display 14 displays the display section 28 indicating the selections, and rice and the agricultural machine 1 within the display section 28. The display 14 displays the display section 29 indicating the start date of a simulation. In the display section 29 indicating the start date of the simulation, the section 29a for input of day/month/year and a run button 29b. When the user inputs the day/month/ year when the user wishes to start work into the section 29a for input of day/month/year and operates the run button 29b, the terminal 10 of the user transmits, to the server 1, the selections, i.e., rice and the agricultural machine 1, and the day/month/year when the user wishes to start work.

The server 1 receives the selections and the day/month/year when the user wishes to start work, and, based on the selections, the day/month/year when the user wishes to start work, and the information in the agricultural field table T, performs the simulation of the growth process of rice in the agricultural field 1 with time. For example, in the case where the agricultural machine 1 is a rice transplanter, the server 1 calculates, based on the changed parameters, the movement of the agricultural machine object 40 representing the rice transplanter relative to the agricultural field object 30, and generates, based on the calculated movement, image data indicating the moving agricultural machine object 40.

The server 1 calculates the positions of the crop objects 30a planted in the agricultural field object 30, i.e., the positions of seedlings, such that the positions are associated with the movement of the agricultural machine object 40, i.e., the movement of the rice transplanter, and generates image data of the seedlings displayed at the calculated positions. The server 1 stores the image data indicating the moving agricultural machine object 40 and the image data indicating the crop objects 30a in the auxiliary storing unit 4 or the main storing unit 3 such that the image data indicating the moving agricultural machine object 40 and the image data indicating the crop objects 30a are associated with each other.

The server 1 transmits, to the terminal 10 of the user, the associated image data indicating the moving agricultural machine object 40 and the image data indicating the crop objects 30a. The controller 11 of the terminal 10 of the user, when receiving the image data indicating the moving agricultural machine object 40 and the image data indicating the crop objects 30a, causes the agricultural machine object 40 and the crop objects 30a to be displayed in the virtual space, and performs the movement of the agricultural machine object 40 relative to the agricultural field object 30 in the virtual space. The movement of the agricultural machine object 40 is based on the changed parameters. That is, the agricultural machine object 40 changes according to changes in the parameters (as the work is performed by the advisor B). For example, the travel route on the agricultural field object 30 differs between before and after parameters are changed.

The user can input a message, for example, gratitude for the work, into the terminal 10 of the user. When the user operates the make-payment button 48, the terminal 10 of the user transmits an instruction to start a payment process to the server 1. The make-payment button 48 functions as a receiver to receive a payment. When receiving the instruction to start a payment process, the server 1 performs the payment process for the work of making settings of the agricultural machine 1. Specifically, the server 1 charges a credit card company the fee shown in FIG. 14 or withdraws the fee shown in FIG. 14 from the user's bank account. The server 1 stores, in advance, information required for the payment process such as the user's credit card number and the user's bank account. After the user operates the make-payment button 48, the controller 11 of the terminal 10 of the user may cause the display 14 to display a screen to receive input of the information required for the payment process. The information required for the payment process is transmitted to the server 1, and the server 1 performs the payment process. After the payment process is completed, the server 1 transmits information indicating that the payment is completed to the terminal 10 of the user. When receiving the information indicating that the payment is completed, the controller 11 of the terminal 10 causes the display 14 to display the information indicating the payment is completed (not shown).

Also in the example embodiment 3, similar to the example embodiment 2, a display process to cause the display 14 of the terminal 10 of the user to display a virtual space is performed. The payment process in the example embodiment 3 is the same as steps S51 to S60 shown in FIG. 24 except that the advisor A in the description is replaced with the advisor B, and therefore the detailed description thereof is omitted.

Also in the example embodiment 3, similar to the example embodiment 1, a payment process is performed when the work performed by the advisor is completed. The payment process in the example embodiment 3 is the same as steps S41 to S48 shown in FIG. 19 except that the agent in the description is replaced with the advisor, and therefore the detailed description thereof is omitted.

The agricultural support system according to the example embodiment 3 causes the avatar 33 representing the advisor B (agricultural-machine-related person) to be displayed in the virtual space. The user can receive advice relating to the settings of the agricultural machine from, for example, the avatar 33 representing an engineer of agricultural machines, in the virtual space.

It is possible to request the avatar 33 representing an agricultural-machine-related person to perform work such as work of making settings of the agricultural machine, in the virtual space. When the agricultural-machine-related person performs the requested work, the movement of the agricultural machine object 40 changes in the virtual space according to the work performed. This makes it possible for the user to intuitively know the changes in the movement of the agricultural machine after the settings have been changed.

It is possible to request the agricultural-machine-related person to perform work on the actual agricultural machine. When the agricultural-machine-related person performs the requested work, the user makes a payment to the agricultural-machine-related person. Since the application program in the terminal 10 performs a payment process, it is possible to perform a payment process easily and reliably.

Note that the computer program can be deployed on a single computer, or provided on a single website or a plurality of websites in a distributed manner such that the computer program is executed by a plurality of computers connected with each other via the communication network N.

While example embodiments have been described above, it is to be understood that the embodiments disclosed herein are considered as examples in all aspects and are not considered as limitations. The scope of the present invention is to be determined by the claims, and is intended to include all variations and modifications within the scope of the claims and their equivalents. Any of the matters disclosed in the above example embodiments may be combined. Any of the independent claims and dependent claims in the claims can be combined in any manner regardless of their dependency. Although the claims are drafted such that some claims depend from two or more other claims (multiple dependent claim structure), this does not imply any limitation. Claims may be drafted such that some claims depend from at least one multiple dependent claim (multiple-multiple dependent claim structure).

### Reference Signs List

- 1: Server
- 2: Controller
- 3: Main storing unit (memory and/or storage)
- 4: Auxiliary storing unit (memory and/or storage)
- 5, 15: Record medium
- 10: Terminal
- 11: Controller
- 12: Main storing unit (memory and/or storage)
- 13: Auxiliary storing unit (memory and/or storage)
- 14: Display
- 21 to 23: Agricultural field button
- 25: Crop information button
- 26: Agricultural machine information button
- 27: Advisor information button
- 30: Agricultural field object
- 31 to 33: Avatar
- 40: Agricultural machine object
- T: Agricultural field table

## Claims

1. A computer program to cause a computer to perform the steps of:
acquiring agricultural field information relating to an agricultural field; and
based on the acquired agricultural field information, outputting an agricultural field object representing the agricultural field in a virtual space.

2. The computer program according to claim 1, wherein the computer program is configured to cause a computer to perform the steps of:
acquiring agricultural machine information relating to an agricultural machine;
based on the acquired agricultural machine information, outputting an agricultural machine object representing the agricultural machine in the virtual space;
receiving an operation relating to the agricultural machine object;
based on the received operation, performing a movement of the agricultural machine object relative to the agricultural field object in the virtual space; and
causing the agricultural field object to change in the virtual space according to the movement of the agricultural machine object.

3. The computer program according to claim 2, wherein the computer program is configured to cause a computer to perform the steps of:
acquiring crop information relating to at least one type of crop;
receiving a selection of one of the at least one type of crop included in the crop information;
outputting one or more crop objects representing one or more crops of the selected one of the at least one type to the agricultural field object;
based on the received operation, performing the movement of the agricultural machine object relative to the one or more crop objects in the virtual space; and
causing the one or more crop objects to change in the virtual space according to the movement of the agricultural machine object.

4. The computer program according to claim 2 or 3, wherein
the agricultural machine information includes a fee for using the agricultural machine in the agricultural field; and
the computer program is configured to cause a computer to perform the step of, after performing the movement of the agricultural machine object, receiving a payment of the fee.

5. The computer program according to claim 2 or 3, wherein the computer program is configured to cause a computer to perform the step of outputting a movement log relating to the agricultural machine object.

6. The computer program according to any one of claims 1 to 3, wherein the computer program is configured to cause a computer to perform the steps of:
acquiring crop information relating to at least one type of crop;
acquiring environment information relating to an environment including weather;
receiving a selection of one of the at least one type of crop;
outputting one or more crop objects representing one or more crops of the selected one of the at least one type to the agricultural field object; and
causing the one or more crop objects representing the one or more crops of the selected one of the at least one type to change in the virtual space according to a change in the environment.

7. The computer program according to any one of claims 1 to 3, wherein the computer program is configured to cause a computer to perform the steps of:
acquiring crop information relating to at least one type of crop and production information including the amount of fertilizer application or a yield of the at least one type of crop;
receiving a selection of one of the at least one type of crop included in the crop information;
outputting one or more crop objects representing one or more crops of the selected one of the at least one type to the agricultural field object; and
based on the production information, causing the one or more crop objects representing the one or more crops of the selected one of the at least one type to change in the virtual space.

8. The computer program according to any one of claims 1 to 3, wherein the computer program is configured to cause a computer to perform the steps of:
acquiring avatar information relating to an agricultural-work-related person;
receiving a call for the agricultural-work-related person; and
based on the acquired avatar information, outputting an avatar representing the called agricultural-work-related person in the virtual space.

9. The computer program according to claim 8, wherein the computer program is configured to cause a computer to perform the steps of:
receiving a request for the agricultural-work-related person to perform work in the virtual space; and
when the agricultural-work-related person performs the requested work, causing the agricultural field object to change in the virtual space according to the work.

10. The computer program according to claim 8, wherein the computer program is configured to cause a computer to perform the steps of:
receiving a request for the agricultural-work-related person to perform work in the virtual space; and
after the agricultural-work-related person performs the requested work, receiving a payment paid to the agricultural-work-related person.

11. The computer program according to claim 2 or 3, wherein the computer program is configured to cause a computer to perform the steps of:
acquiring avatar information relating to an agricultural-machine-related person;
receiving a call for the agricultural-machine-related person; and
based on the acquired avatar information, outputting an avatar representing the called agricultural-machine-related person in the virtual space.

12. The computer program according to claim 11, wherein the computer program is configured to cause a computer to perform the steps of:
receiving a request for the agricultural-machine-related person to perform work in the virtual space; and
when the agricultural-machine-related person performs the requested work, causing the movement of the agricultural machine object to change in the virtual space according to the work.

13. The computer program according to claim 11, wherein the computer program is configured to cause a computer to perform the steps of:
receiving a request for the agricultural-machine-related person to perform work in the virtual space; and
after the agricultural-machine-related person performs the requested work, receiving a payment paid to the agricultural-machine-related person.

14. A method comprising:
acquiring agricultural field information relating to an agricultural field; and
based on the acquired agricultural field information, outputting an agricultural field object representing the agricultural field in a virtual space.

15. An apparatus comprising:
an acquirer to acquire agricultural field information relating to an agricultural field; and
an output interface to, based on the acquired agricultural field information, output an agricultural field object representing the agricultural field in a virtual space.
